(19) Europäisches Patentamt
European Patent Office
Office européen des brevets

(11) EP 3 564 321 B1

(12) EUROPEAN PATENT SPECIFICATION

(45) Date of publication and mention of the grant of the patent:
**04.03.2026 Bulletin 2026/10**

(21) Application number: **17888376.5**

(22) Date of filing: **25.12.2017**

(51) International Patent Classification (IPC):
***C08L 101/00*** (2006.01) ***C08B 15/04*** (2006.01)
***C08B 15/06*** (2006.01) ***C08L 1/02*** (2006.01)
***C08L 9/00*** (2006.01) ***D06M 13/328*** (2006.01)
***D06M 101/06*** (2006.01) ***D06M 13/325*** (2006.01)
***D06M 15/53*** (2006.01) ***C08K 9/04*** (2006.01)
***C08L 27/06*** (2006.01) ***C08L 63/00*** (2006.01)
***C08K 7/02*** (2006.01) ***C08K 5/17*** (2006.01)
***D06M 13/17*** (2006.01)

(52) Cooperative Patent Classification (CPC):
(C-Sets available)
**D06M 11/30; C08B 15/04; C08B 15/06; C08L 1/02; C08L 1/08; C08L 9/00; C08L 27/06; C08L 63/00; C08L 101/00; D06M 13/17; D06M 13/325; D06M 13/328; D06M 15/53;** D06M 11/80; D06M 13/03; (Cont.)

(86) International application number:
**PCT/JP2017/046466**

(87) International publication number:
**WO 2018/123985 (05.07.2018 Gazette 2018/27)**

(54) **RESIN COMPOSITION**

HARZZUSAMMENSETZUNG

COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2016 JP 2016253930**

(43) Date of publication of application:
**06.11.2019 Bulletin 2019/45**

(73) Proprietor: **Kao Corporation**
**Chuo-Ku**
**Tokyo 103-8210 (JP)**

(72) Inventor: **TSUBOI, Takuma**
**Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 615 128**
**EP-A1- 2 784 209**
**EP-A1- 3 088 600**
**WO-A1-2011/071156**
**WO-A1-2012/032931**
**WO-A1-2015/098543**
**JP-A- 2010 059 304**
**JP-A- 2012 127 017**
**JP-A- 2013 151 661**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
D06M 2101/06

C-Sets
**C08L 9/00, C08L 1/08, C08L 71/02;**
**C08L 27/06, C08K 9/04;**
**C08L 27/06, C08L 1/08, C08L 71/02;**
**C08L 63/00, C08K 9/04;**
**C08L 63/00, C08L 1/08, C08L 71/02**

## Description

### FIELD OF THE INVENTION

The present invention relates to a resin composition. More specifically, the present invention relates to a resin composition which can be suitably used as daily sundries, household electric appliance parts, automobile parts, and the like, a molded article made of the resin composition, a method for producing the resin composition, and a cellulose fiber composite blendable as a filler in the resin composition.

### BACKGROUND OF THE INVENTION

Conventionally, plastic materials derived from petroleum which is a limited resource have been widely used. However, in the recent years, the techniques that are environmentally friendly have been spotlighted. Under such technical background, materials using cellulose fibers which are biomass that are present abundantly in nature have been remarked.

For example, it has been reported in Patent Publication 1 that a fine cellulose fiber composite to which a surfactant is adsorbed is blended with various resins, thereby obtaining a composite material having both high mechanical strength and transparency.

In addition, Patent Publication 2 discloses that a composite material obtained by blending a fine cellulose fiber composite in which a hydrocarbon group is bound to fiber surfaces via an amide bonding, with a polyester resin, the fine cellulose fiber composite having an average fiber diameter of from 0.1 to 200 nm, having excellent transparency and mechanical strength, and being environmentally friendly.

Patent Publication 3 describes a polyester resin composition containing a polyester resin and a fine cellulose fiber composite having an average fiber diameter of 0.1 to 200 nm in which a hydrocarbon group is linked to a fine cellulose fiber through an amide bond.

Patent Publication 4 relats to a fine cellulose fiber composite comprising fine cellulose fibers and a polymer having an ethylene oxide/propylene oxide copolymer moiety or a propylene oxide polymer moiety, the fine cellulose fibers being connected with the polymer via an amide bond. Patent Publication 5 describes a transparent substrate which includes at least an oxidized polysaccharide, and has a linear expansion coefficient of 50 ppm/°C or less at a temperature in the range of 30-150°C and a light transmittance of 70% or more at 660 nm.

Patent Publication 1: Japanese Patent Laid-Open No. 2011-140738
Patent Publication 2: Japanese Patent Laid-Open No. 2013-151636
Patent Publication 3: JP 2013-151661 A
Patent Publication 4: EP 3 088 600 A1
Patent Publication 5: EP 2 615 128 A1

### SUMMARY OF THE INVENTION

The present invention relates to the following [1] to [5]:

[1] A resin composition containing

a) a resin, wherein the resin is:

an elastomeric resin and is a diene-based rubber or a non-diene-based rubber,
a thermoplastic resin and is a (meth)acrylic resin,
a thermosetting resin and is an epoxy resin or a polyurethane resin, or
a photocurable resin including a urethane (meth)acrylate oligomer or resin; and

b) a cellulose fiber composite having a carboxy group in the cellulose molecule, wherein an aldehyde group content is 0.15 mmol/g or less, and wherein the cellulose fiber composite contains a compound having a modifying group that is ionically bound and/or covalently bound to a carboxy group on the cellulose fiber surface;

wherein the compound having a modifying group contains a primary amine, a secondary amine or a tertiary amine and has a chained saturated hydrocarbon group, and wherein the cellulose fiber composite is finely fibrillated.

[2] A molded article containing a resin composition as defined in the above [1].

[3] A method for producing a resin composition as defined in the above [1], including melt-kneading

a) a resin, wherein the resin is:

an elastomeric resin and is a diene-based rubber or a non-diene-based rubber,
a thermoplastic resin and is a (meth)acrylic resin,
a thermosetting resin and is an epoxy resin or a polyurethane resin, or
a photocurable resin including a urethane (meth)acrylate oligomer or resin; and

b) a cellulose fiber composite having a carboxy group in the cellulose molecule, wherein an aldehyde group content is 0.15 mmol/g or less, and wherein the cellulose fiber composite contains a compound having a modifying group that is ionically and/or covalently bound to a carboxy group on the cellulose fiber surface; wherein the compound having a modifying group contains a primary amine, a secondary amine or a tertiary amine and has a chained saturated hydrocarbon group; and

wherein the cellulose fiber composite is finely fibrillated.
[4] Use of a cellulose fiber composite, which is an additive for a resin composition, the cellulose fiber composite having a carboxy group in the cellulose molecule, wherein an aldehyde group content is 015 mmol/g or less, and wherein the cellulose fiber composite contains a compound having a modifying group that is ionically bound and/or covalently bound to a carboxy group on the cellulose fiber surface;

wherein the compound having a modifying group contains a primary amine, a secondary amine or a tertiary amine and has a chained saturated hydrocarbon group; and
wherein the cellulose fiber composite is finely fibrillated.

## DETAILED DESCRIPTION OF THE INVENTION

However, in the recent years, it has been expected to use these composite materials in even wider applications, so that even more improved composite materials having high heat resistance in addition to the excellent rigidity have been desired.

The present invention relates to a resin composition satisfying both the heat resistance and the rigidity, a molded article made of the resin composition, a method for producing the resin composition, and a cellulose fiber composite blendable as a filler in the resin composition.

The resin composition of the present invention exhibits an excellent effect of having high heat resistance.

The resin composition of the present invention contains a resin and a cellulose fiber composite, characterized in that the cellulose fiber composite is surface-modified, and that an aldehyde group content of the surface thereof is 0.15 mmol/g or less. Here, for the intended purpose of clarifying that the cellulose fiber composite or the raw material cellulose fibers or the like as used herein are finely fibrillated, they may be referred to as "fine cellulose fiber composite," or "fine cellulose fibers" in some cases.

In general, in biosynthesis of natural celluloses, nanofibers called microfibrils are firstly formed, and these nanofibers are multi-bundled, thereby constructing a higher order solid structure. The cellulose fiber composite usable in the present invention is obtained by utilizing this construction in principle. In order to weaken the firm hydrogen bonds between the surfaces which bring about strong aggregation between the microfibrils in the cellulose solid raw material derived from nature, a part of them is oxidized, and converted to carboxy groups, and one or more members selected from a carboxy group and a (non-oxidized) hydroxyl group of the surface are further modified to obtain the composite. The cellulose fiber composite obtained as described above has improved hydrophobicity, so that its dispersibility in the organic solvent or in the resin becomes favorable, thereby providing a resin composition having excellent physical properties such as rigidity when blended with the resin. However, in cases where a resin composition is desired to have high heat resistance, it has been found out that the above cellulose fiber composite is not necessarily sufficient in heat resistance in some cases. In view of the above, as a result of intensive studies in the improvements of heat resistance, the present inventors have remarked that in the oxidization reaction when preparing the cellulose fiber composite, a hydroxyl group of a cellulose molecule is replaced with a carboxy group via an aldehyde group, but a by-product of an aldehyde group itself is generated without sufficiently progressing the reaction. Moreover, it has been assumed that this aldehyde group acts on a modifying group of the cellulose fiber composite or a remaining compound having a modifying group during the reaction or the like to generate a by-product, which in turn influences the heat resistance. In view of the above, after the oxidization treatment of oxidizing a hydroxyl group to an aldehyde group, it has been assumed that if it is possible to further carry out, for example, an oxidization or reduction reaction, to reduce an aldehyde group to a given level or lower, the heat resistance can be improved. However, the present invention is not intended to be limited by these assumptions.

[Cellulose Fiber Composite]

The cellulose fiber composite usable in the present invention is a cellulose fiber composite having a carboxy group in a cellulose molecule, characterized in that an aldehyde group content 0.15 mmol/g or less, more preferably 0.1 mmol/g or less, even more preferably 0.05 mmol/g or less, and even more preferably substantially 0 mmol/g. Here, substantially 0 mmol/g refers to a case of including an inevitably trace amount of an aldehyde group. Here, the term "aldehyde group content" means a total amount of the aldehyde group in the celluloses constituting the cellulose fiber composite, and specifically measured in accordance with a method described in Examples set forth below.

< Cellulose Fibers >

(Carboxy Group Content)

The cellulose fibers constituting the cellulose fiber composite usable in the present invention have a carboxy group content of preferably 0.1 mmol/g or more, more preferably 0.4 mmol/g or more, even more preferably 0.6 mmol/g or more, and even more preferably 0.8 mmol/g or more, from the viewpoint of introduction of the modifying group. In addition, the cellulose fibers have a carboxy group content of preferably 3 mmol/g or less, more preferably 2 mmol/g or less, even more preferably 1.8 mmol/g or less, even more preferably 1.5 mmol/g or less, and even more preferably 1.2 mmol/g or less, from the viewpoint of improving handling property. Here, the term "carboxy group content" means a total amount of carboxy groups in the celluloses constituting the cellulose fibers, and specifically measured in accordance with a method described in Examples set forth below.

(Aldehyde Group Content)

In addition, as the constituting cellulose fibers, the aldehyde group content is preferably of the same level as the aldehyde group content of the cellulose fiber composite obtained. Therefore, the aldehyde group content is 0.15 mmol/g or less, even more preferably 0.1 mmol/g or less, even more preferably 0.05 mmol/g or less, and even more preferably substantially 0 mmol/g, from the viewpoint of allowing a composite to be contained in the resin, thereby improving heat resistance when provided as a resin composition.

As the cellulose fibers, known ones may be used, or those separately prepared ones may be used. For example, carboxy group-containing cellulose fibers are those obtained by a known treatment, for example, a further oxidization treatment (hereinafter referred to as additional oxidization treatment) or a reduction treatment to carboxy group-containing cellulose fibers that are produced by previously subjecting natural cellulose fibers to allow containment of carboxy groups therein, whereby cellulose fibers having a carboxy group in the cellulose molecule can be obtained. In addition, carboxy group-containing cellulose fibers are those obtained by an additional oxidization treatment or a reduction treatment of fine cellulose fibers previously subjected to a known finely fibrillating treatment against the carboxy group-containing cellulose fibers obtained by an oxidization treatment, so long as the composite formation treatment described later can be carried out.

As to the removal of the aldehyde group, either one of the treatment steps of the reduction treatment or the additional oxidation treatment may be used, or the both may be combined.

The treatment conditions for the additional oxidation can be appropriately set so long as the conditions are conditions for oxidizing an aldehyde group to a carboxy group, without being particularly limited thereto. For example, it is preferable that the additional oxidation is carried out after introducing a carboxy group to a natural cellulose, and the treatment temperature and the treatment time are determined by an oxidizing agent used. The oxidizing agent is not particularly limited, and, for example, a chlorite can be used. The chlorite includes sodium chlorite and potassium chlorite. A liquid pH in the treatment is preferably 3 or more and 10 or less, more preferably 4 or more and 7 or less, and even more preferably 4 or more and 5 or less, from the viewpoint of reactivities. In addition, the treatment temperature is preferably 0°C or higher, and more preferably 10°C or higher, and preferably 60°C or lower, and more preferably 40°C or lower, from the viewpoint of reactivities. Also, the treatment time is preferably 1 hour or more, and preferably 10 hours or more, from the viewpoint of reactivities.

The treatment system of the above additional oxidization treatment may contain other components besides the cellulose fibers and the oxidizing agent. The other components are not particularly limited so long as the effects of the present invention would not be impaired.

The treatment conditions of reduction can be appropriately set so long as the conditions are conditions of reducing an aldehyde group to a hydroxyl group, without being particularly limited thereto. The reduction treatment step is preferably carried out after the introduction of a carboxy group to a natural cellulose. The treatment temperature and the treatment time are determined by a reducing agent used. The reducing agent includes, but not particularly limited to, for example, metal hydrides and dithionites. The metal hydride includes sodium borohydride, lithium borohydride, and the

like, and the dithionite includes sodium dithionite and potassium dithionite. These reducing agents may be used alone or in a combination of two or more kinds. A liquid pH of the treatment is preferably 7 or more and 12 or less, more preferably 9 or more and 11 or less, and even more preferably 10, from the viewpoint of reactivities. In addition, the treatment temperature is preferably 0°C or higher, and more preferably 10°C or higher, and preferably 60°C or lower, and more preferably 40°C or lower, from the viewpoint of reactivities. Also, the treatment time is preferably 1 hour or more, and preferably 3 hours or more, from the viewpoint of reactivities.

The treatment system of the above reduction treatment may contain other components besides the cellulose fibers and the reducing agent. The other components are not particularly limited so long as the effects of the present invention would not be impaired.

< Modifying Group >

In addition, one of the features of the cellulose fiber composite usable in the present invention resides in that a modifying group is bound to a carboxy group of the above cellulose fibers. The cellulose fiber composite as described above having a carboxy group in a cellulose molecule, wherein an aldehyde group content is 0.15 mmol/g or less, and wherein the cellulose fiber composite contains a modifying group bound to a carboxy group, can be used, for example, as an additive for the resin composition of the present invention, and the cellulose fiber composite, which is an additive for the resin composition is encompassed in the present invention.

The bond of the modifying group in the cellulose fiber composite as used herein means a state that a modifying group is ionically bonded and/or covalently bonded to a carboxy group, on the cellulose fiber surface. This bond is obtained by, ionically bonding and/or covalently bonding a compound having a modifying group, to a carboxy group. The bonding form to a carboxy group includes an ionic bonding and a covalent bonding. The covalent bonding as used herein includes, for example, an amide bonding, from the viewpoint of obtaining a resin composition having excellent heat resistance. Accordingly, it is preferable that the cellulose fiber composite of the present invention is obtained by ionically bonding and/or amide bonding a compound having a modifying group to a carboxy group already existing on the cellulose fiber surface, from the viewpoint of obtaining a resin composition having excellent heat resistance.

(Compound Having Modifying Group)

The compound having a modifying group may be any of those having a modifying group described later, and, for example, the following compounds can be used, depending upon the bonding forms. In the case of ionic bonding, the compound may be any one of primary amines, secondary amines, tertiary amines. Among them, preferred are primary amines, secondary amines, tertiary aminesfrom the viewpoint of dispersibility. Described herein are also quaternary ammonium compounds and an anionic component for said ammonium compound or phosphonium compound includes preferably halogen ions such as chlorine ions and bromine ions, hydrogensulfate ions, perchlorate ions, tetrafluoroborate ions, hexafluorophosphate ions, trifluoromethanesulfonate ions, and hydroxy ions, and more preferably hydroxy ions, from the viewpoint of reactivities. In the case of covalent bonding, the following compounds can be used depending upon the substituted functional groups. In the modification to the carboxy group, in the case of an amide bonding, the compound may be any one of primary amines and secondary amines. Described herein are also ester and urethane bonding, as well as the modification of a hydroxyl group on the cellulose fiber surface. In the case of an ester bonding, an alcohol is preferred, which includes, for example, butanol, octanol, and dodecanol. In the case of an urethane bonding, an isocyanate compound is preferred. In the modification to the hydroxyl group, in the case of an ester bonding, the compound is preferably an acid anhydride, which includes, for example, acetic anhydride, propionic anhydride, and succinic anhydride. In the case of an ether bonding, the compound includes epoxy compounds (e.g., alkylene oxides and alkyl glycidyl ethers), alkyl halides and derivatives thereof (e.g., methyl chloride, ethyl chloride, and monochloroacetic acid).

As the modifying group in the present invention, a hydrocarbon group is used. These modifying groups may be bound (introduced) to the cellulose fibers, alone or in a combination of two or more kinds.

(Hydrocarbon Group)

The hydrocarbon group is chained saturated hydrocarbon groups, from the viewpoint of inhibiting side reactions, and from the viewpoint of stability.

The chained saturated hydrocarbon group may be linear or branched. The number of carbon atoms of the chained saturated hydrocarbon group is preferably 1 or more, more preferably 2 or more, even more preferably 3 or more, even more preferably 6 or more, and even more preferably 8 or more, from the viewpoint of including the composite in the resin, thereby improving heat resistance when formed into a resin composition. In addition, the number of carbon atoms is preferably 30 or less, more preferably 24 or less, even more preferably 18 or less, and even more preferably 16 or less, from

the same viewpoint. Here, the number of carbon atoms of the hydrocarbon group hereinafter means a total number of carbon atoms as an entirety of a modifying group.

Specific examples of the chained saturated hydrocarbon group include, for example, a methyl group, an ethyl group, a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl, a docosyl group, an octacosanyl group, and the like, and preferred are a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl, a docosyl group, and an octacosanyl group, from the viewpoint of including the composite in the resin, thereby improving heat resistance when formed into a resin composition. These chained saturated hydrocarbon groups may be introduced alone or in a given proportion of two or more kinds.

Described herein are also chained unsaturated hydrocarbon groups, cyclic saturated hydrocarbon groups and aromatic hydrocarbon groups. The chained unsaturated hydrocarbon group may be linear or branched. The number of carbon atoms of the chained unsaturated hydrocarbon group is preferably 1 or more, more preferably 2 or more, and even more preferably 3 or more, from the viewpoint of handling property. In addition, the number of carbon atoms is preferably 30 or less, more preferably 18 or less, even more preferably 12 or less, and still even more preferably 8 or less, from the viewpoint of easy availability.

Specific examples of the chained unsaturated hydrocarbon group include, for example, an ethylene group, a propylene group, a butene group, an isobutene group, an isoprene group, a pentene group, a hexene group, a heptene group, an octene group, a nonene group, a decene group, a dodecene group, a tridecene group, a tetradecene group, and an octadecene group, and preferred are an ethylene group, a propylene group, a butene group, an isobutene group, an isoprene group, a pentene group, a hexene group, a heptene group, an octene group, a nonene group, a decene group, and a dodecene group, from the viewpoint of compatibility with the resin. These chained unsaturated hydrocarbon groups may be introduced alone or in a given proportion of two or more kinds.

The number of carbon atoms of the cyclic saturated hydrocarbon group is preferably 3 or more, more preferably 4 or more, and even more preferably 5 or more, from the viewpoint of handling property. In addition, the number of carbon atoms is preferably 20 or less, more preferably 16 or less, even more preferably 12 or less, and still even more preferably 8 or less, from the viewpoint of easy availability.

Specific examples of the cyclic saturated hydrocarbon group include, for example, a cyclopropane group, a cyclobutyl group, a cyclopentane group, a cyclohexyl group, a cycloheptyl group, a cyclooctyl group, a cyclononyl group, a cyclodecyl group, a cyclododecyl group, a cyclotridecyl group, a cyclotetradecyl group, a cyclooctadecyl group, and the like, and preferred are a cyclopropane group, a cyclobutyl group, a cyclopentane group, a cyclohexyl group, a cycloheptyl group, a cyclooctyl group, a cyclononyl group, a cyclodecyl group, and a cyclododecyl group, from the viewpoint of compatibility with the resin. These cyclic saturated hydrocarbon groups may be introduced alone or in a given proportion of two or more kinds.

The aromatic hydrocarbon groups are, for example, selected from the group consisting of aryl groups and aralkyl groups. As the aryl group and the aralkyl group, those groups in which the aromatic ring moiety is substituted or unsubstituted may be used.

A total number of carbon atoms of the above aryl group may be 6 or more, and a total number of carbon atoms is preferably 24 or less, more preferably 20 or less, even more preferably 14 or less, even more preferably 12 or less, and even more preferably 10 or less, from the viewpoint of compatibility with the resin.

A total number of carbon atoms of the above aralkyl group is 7 or more, and a total number of carbon atoms is preferably 8 or more, from the viewpoint of compatibility with the resin. Also, a total number of carbon atoms is preferably 24 or less, more preferably 20 or less, even more preferably 14 or less, even more preferably 13 or less, and even more preferably 11 or less, from the same viewpoint.

The aryl group includes, for example, a phenyl group, a naphthyl group, an anthryl group, a phenanthryl group, a biphenyl group, a triphenyl group, a terphenyl group, and groups in which these groups are substituted with a substituent given later, and these aryl groups may be introduced alone or in a given proportion of two or more kinds. Among them, a phenyl group, a biphenyl group, and a terphenyl group are preferred, from the viewpoint of compatibility with the resin.

The aralkyl group includes, for example, a benzyl group, a phenethyl group, a phenylpropyl group, a phenylpentyl group, a phenylhexyl group, a phenylheptyl group, a phenyloctyl group, and groups in which these groups are substituted with a substituent given later, and these aralkyl groups may be introduced alone or in a given proportion of two or more kinds. Among them, a benzyl group, a phenethyl group, a phenylpropyl group, a phenylpentyl group, a phenylhexyl group, and a phenylheptyl group are preferred, from the viewpoint of compatibility with the resin.

As the primary amine, the secondary amine, the tertiary amine, the quaternary ammonium compound, the phosphonium compound, the acid anhydride, and the isocyanate compound, each having the above hydrocarbon group, commercially available products can be used, or the compound can be prepared in accordance with a known method.

Specific examples of the primary to tertiary amines include, for example, ethylamine, diethylamine, triethylamine, propylamine, dipropylamine, butylamine, dibutylamine, hexylamine, dihexylamine, octylamine, dioctylamine, trioctylamine, dodecylamine, didodecylamine, stearylamine, distearylamine, monoethanolamine, diethanolamine, triethanolamine, aniline, and benzylamine. The quaternary ammonium compound includes, for example, tetramethylammonium hydroxide (TMAH), tetraethylammonium hydroxide (TEAH), tetraethylammonium chloride, tetrapropylammonium hydroxide (TPAH), tetrabutylammonium hydroxide (TBAH), tetrabutylammonium chloride, lauryltrimethylammonium chloride, dilauryldimethyl chloride, stearyltrimethylammonium chloride, distearyldimethylammonium chloride, cetyltrimethylammonium chloride, and alkylbenzyldimethylammonium chlorides. Among them, preferred are propylamine, dipropylamine, butylamine, dibutylamine, hexylamine, dihexylamine, octylamine, dioctylamine, trioctylamine, dodecylamine, didodecylamine, distearylamine, tetraethylammonium hydroxide (TEAH), tetrabutylammonium hydroxide (TBAH), tetrapropylammonium hydroxide (TPAH), and aniline, and more preferred are propylamine, dodecylamine, tetrabutylammonium hydroxide (TBAH), and aniline, from the viewpoint of dispersibility and heat resistance.

Therefore, the present invention embraces a cellulose fiber composite having a carboxy group in the cellulose molecule, wherein an aldehyde group content is 0.20 mmol/g or less, and wherein the cellulose fiber composite contains a primary to tertiary hydrocarbon-based amine bound to a carboxy group via an ionic bonding and/or a covalent bonding. The cellulose fiber composite of the present invention is preferably used as an additive for a resin composition.

The average binding amount of the hydrocarbon group in the cellulose fiber composite, based on the cellulose fibers, is preferably 0.01 mmol/g or more, more preferably 0.05 mmol/g or more, even more preferably 0.1 mmol/g or more, even more preferably 0.3 mmol/g or more, and even more preferably 0.5 mmol/g or more, from the viewpoint of including the composite in the resin, thereby improving heat resistance when formed into a resin composition. The average binding amount is preferably 3 mmol/g or less, more preferably 2.5 mmol/g or less, even more preferably 2 mmol/g or less, even more preferably 1.8 mmol/g or less, and even more preferably 1.5 mmol/g or less, from the viewpoint of reactivities. Here, even in a case where a hydrocarbon group selected from the chained saturated hydrocarbon groups, the chained unsaturated hydrocarbon groups, and the cyclic saturated hydrocarbon groups is introduced simultaneously with an aromatic hydrocarbon group, it is preferable that an individual average binding amount is within the range defined above.

In addition, the introduction ratio of the hydrocarbon group for any modifying group is preferably 10% or more, more preferably 30% or more, even more preferably 50% or more, even more preferably 60% or more, and even more preferably 70% or more, from the viewpoint of obtaining a resin composition having excellent heat resistance, and the introduction ratio is preferably 99% or less, more preferably 97% or less, even more preferably 95% or less, and even more preferably 90% or less, from the viewpoint of reactivities. Here, in a case where a hydrocarbon group selected from the chained saturated hydrocarbon groups, the chained unsaturated hydrocarbon groups, and the cyclic saturated hydrocarbon groups is introduced simultaneously with an aromatic hydrocarbon group, it is preferable that the introduction ratio is within the range defined above so long as a total of the introduction ratios is within the range that does not exceed the upper limit of 100%.

(Copolymer Moiety)

Described herein is also a copolymer moiety as the compound having a modifying group. As the copolymer moiety, for example, an ethylene oxide/propylene oxide (EO/PO) copolymer moiety or the like can be used. Here, the EO/PO copolymer moiety means a structure in which ethylene oxides (EO) and propylene oxides (PO) are polymerized in a random or block form. For example, when an amine having an EO/PO copolymer moiety is represented by the formula (i) given later, the ethylene oxides (EO) and the propylene oxides (PO) form a chain structure of a random or block form, and when the amine has a structure represented by the formula (ii) given later, (EO)a(PO)b, (EO)c(PO)d, and (EO)e(PO)f do not need to be in chain form.

The PO content ratio, % by mol, in the EO/PO copolymer moiety is preferably 1% by mol or more, more preferably 5% by mol or more, even more preferably 7% by mol or more, and even more preferably 10% by mol or more, from the viewpoint of obtaining a resin composition having excellent heat resistance. The content ratio is preferably 100% by mol or less, more preferably 90% by mol or less, even more preferably 85% by mol or less, even more preferably 75% by mol or less, even more preferably 60% by mol or less, even more preferably 50% by mol or less, even more preferably 40% by mol or less, and even more preferably 30% by mol or less, from the same viewpoint. Here, the content ratio of PO of 100% by mol refers that the EO/PO copolymer moiety is constituted by PO alone, and it is acceptable that a PO polymer moiety is introduced in the present invention.

The molecular weight of the EO/PO copolymer moiety is preferably 500 or more, more preferably 1,000 or more, and even more preferably 1,500 or more, from the viewpoint of obtaining a resin composition having excellent heat resistance, and the molecular weight is preferably 10,000 or less, more preferably 7,000 or less, even more preferably 5,000 or less, even more preferably 4,000 or less, even more preferably 3,500 or less, and even more preferably 2,500 or less, from the same viewpoint. For example, in a case of an amine having a structure represented by the formula (ii) given later, a total of the molecular weights of (EO)a(PO)b+(EO)c(PO)d+(EO)e(PO)f is defined as a molecular weight of the

EO/PO copolymer moiety. The PO content ratio, % by mol, of the EO/PO copolymer moiety and the molecular weight of the EO/PO copolymer moiety can be obtained by calculating from an average number of moles added when an amine is produced.

It is preferable that the EO/PO copolymer moiety and the amine are bound directly or via a linking group. The linking group is preferably a hydrocarbon group, and an alkylene group having the number of carbon atoms of preferably from 1 to 6, and more preferably from 1 to 3, is used. For example, an ethylene group or a propylene group is preferred.

The amine having an EO/PO copolymer moiety includes, for example, a compound represented by the following formula (i):

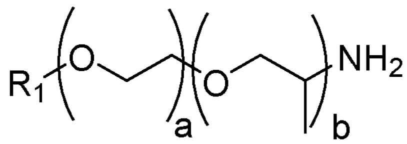

(i)

wherein $R_1$ is a hydrogen atom, a linear or branched alkyl group having from 1 to 6 carbon atoms, a $-CH_2CH(CH_3)NH_2$ group, or a group represented by the following formula (ii); EO and PO are present in a random or block form; a is a positive number showing an average number of moles of EO added; and b is a positive number showing an average number of moles of PO added,

wherein the formula (ii) is:

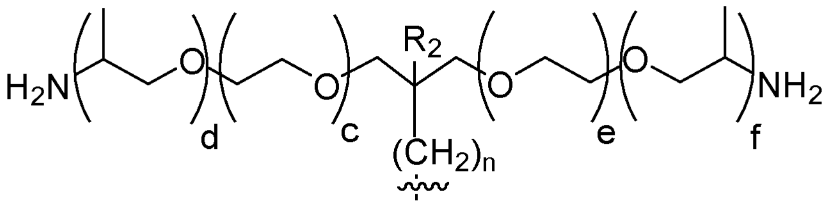

(ii)

wherein n is 0 or 1; $R_2$ is a phenyl group, a hydrogen atom, or a linear or branched alkyl group having from 1 to 3 carbon atoms; EO and PO are present in a random or block form; c and e show an average number of moles of EO added, which is independently a number of from 0 to 50; and d and f show an average number of moles of PO added, which is independently a number of from 1 to 50.

a in the formula (i) shows an average number of moles of EO added, and it is preferably 11 or more, more preferably 15 or more, even more preferably 20 or more, even more preferably 25 or more, and even more preferably 30 or more, from the viewpoint of obtaining a resin composition having excellent heat resistance, and it is preferably 100 or less, more preferably 70 or less, even more preferably 60 or less, even more preferably 50 or less, and even more preferably 40 or less, from the same viewpoint.

b in the formula (i) shows an average number of moles of PO added, and it is preferably 1 or more, more preferably 3 or more, and even more preferably 5 or more, from the viewpoint of obtaining a resin composition having excellent heat resistance, and it is preferably 50 or less, more preferably 40 or less, even more preferably 30 or less, even more preferably 25 or less, even more preferably 20 or less, even more preferably 15 or less, and even more preferably 10 or less, from the same viewpoint.

In addition, as to the PO content ratio, % by mol, in the EO/PO copolymer moiety, when an amine is represented by the formula (i) defined above, the PO content ratio in the copolymer moiety can be calculated from a and b mentioned above, which can be obtained by the formula: $\mathbf{b \times 100/(a + b)}$. When an amine is represented by the formula (i) and the formula (ii) defined above, the content ratio can be similarly calculated by the formula: $(\mathbf{b+d+f})\times 100/(\mathbf{a+b+c+d+e+f})$. The preferred ranges are as mentioned above.

$R_1$ in the formula (i) is a hydrogen atom, a linear or branched alkyl group having from 1 to 6 carbon atoms, a $-CH_2CH(CH_3)NH_2$ group, or a group represented by the formula (ii) defined above, and a hydrogen atom is preferred, from the viewpoint of obtaining a resin composition having excellent heat resistance. The linear or branched alkyl group having from 1 to 6 carbon atoms is preferably a methyl group, an ethyl group, and an iso- or normal-propyl group.

In addition, when $R_1$ in the formula (i) is a group represented by the formula (ii), the linear or branched alkyl group having from 1 to 3 carbon atoms of $R_2$ in the formula (ii) is preferably a methyl group and an ethyl group. When $R_2$ is a methyl group or an ethyl group, it is preferable that n is 1, and when $R_2$ is a hydrogen atom, it is preferable that n is 0. In addition, c and e in the formula (ii) are independently preferably from 10 to 30, and d and f are independently preferably from 5 to 25.

The amine having an EO/PO copolymer moiety represented by the formula (i) can be prepared in accordance with a known method. For example, ethylene oxides and propylene oxides may be added in desired amounts to a propylene glycol alkyl ether, and thereafter a hydroxyl group terminal may be formed into an amino group. The alkyl ether can be opened with an acid as needed so as to have a hydrogen atom at a terminal. For these production methods, Japanese Patent Laid-Open No. Hei-3-181448 can be referred.

As the above amine having an EO/PO copolymer moiety, a commercially available product can be suitably used, and specific examples include Jeffamine M-2070, Jeffamine M-2005, Jeffamine M-2095, Jeffamine M-1000, Jeffamine M-600, Surfoamine B200, Surfoamine L100, Surfoamine L200, Surfoamine L207, Surfoamine L300, XTJ-501, XTJ-506, XTJ-507, XTJ-508 manufactured by HUNTSMAN; M3000 manufactured by BASF, Jeffamine ED-900, Jeffamine ED-2003, Jeffamine D-2000, Jeffamine D-4000, XTJ-510, Jeffamine T-3000, Jeffamine T-5000, XTJ-502, XTJ-509, XTJ-510 and the like. Among them, preferred are Jeffamine M-2070, Jeffamine M-2005, Jeffamine M-1000, Jeffamine M-600, Surfoamine L100, Surfoamine L200, Surfoamine L207, and Surfoamine L300, from the viewpoint of heat resistance. These may be used alone or in a combination of two or more kinds.

The average binding amount of the EO/PO copolymer moiety in the cellulose fiber composite, based on the cellulose fibers, is preferably 0.01 mmol/g or more, more preferably 0.05 mmol/g or more, even more preferably 0.1 mmol/g or more, even more preferably 0.3 mmol/g or more, and even more preferably 0.5 mmol/g or more, from the viewpoint of obtaining a resin composition having excellent heat resistance. In addition, the average binding amount is preferably 3 mmol/g or less, more preferably 2.5 mmol/g or less, even more preferably 2 mmol/g or less, even more preferably 1.8 mmol/g or less, and even more preferably 1.5 mmol/g or less, from the viewpoint of reactivities.

The modification ratio of the EO/PO copolymer moiety in the cellulose fiber composite is preferably 10% or more, more preferably 20% or more, even more preferably 30% or more, even more preferably 40% or more, even more preferably 50% or more, even more preferably 60% or more, and even more preferably 70% or more, from the viewpoint of obtaining a resin composition having excellent heat resistance, and the modification ratio is preferably 95% or less, from the viewpoint of obtaining a resin composition having excellent heat resistance.

Here, the above modifying group may have a substituent. For example, in a case where the modifying group is a hydrocarbon group, it is preferable that a total number of carbons of an overall modifying group including a substituent is within the range defined above. The substituent includes, for example, alkoxy groups having from 1 to 6 carbon atoms, such as a methoxy group, an ethoxy group, a propoxy group, an isopropoxy group, a butoxy group, an isobutoxy group, a sec-butoxy group, a tert-butoxy group, a pentyloxy group, an isopentyloxy group, and a hexyloxy group; alkoxycarbonyl groups of which alkoxy group has from 1 to 6 carbon atoms, such as a methoxycarbonyl group, an ethoxycarbonyl group, a propoxycarbonyl group, an isopropoxycarbonyl group, a butoxycarbonyl group, an isobutoxycarbonyl group, a sec-butoxycarbonyl group, a tert-butoxycarbonyl group, a pentyloxycarbonyl group, and an isopentyloxycarbonyl group; halogen atoms such as a fluorine atom, a chlorine atom, a bromine atom, and an iodine atom; acyl groups having from 1 to 6 carbon atoms such as an acetyl group and a propionyl group; aralkyl groups; aralkyloxy groups; alkylamino groups having from 1 to 6 carbon atoms; and dialkylamino groups of which alkyl group has from 1 to 6 carbon atoms. Here, the hydrocarbon group mentioned above itself may be bonded as a substituent.

The average binding amount of the modifying group as used herein can be adjusted by an amount of a compound having a modifying group, the kinds of a compound having a modifying group, a reaction temperature, a reaction time, a solvent, or the like. In addition, the average binding amount, mmol/g, and the introduction ratio, %, of the modifying group in the cellulose fiber composite are an amount and a proportion of the modifying group introduced to a carboxy group or a hydroxyl group on the surface of the cellulose fibers, and the carboxy group content or the hydroxyl group content of the cellulose fibers can be calculated in accordance with a known method (for example, titration, IR determination, or the like).

< Average Fiber Diameter >

The cellulose fiber composite usable in the present invention is not particularly limited in the average fiber diameter regardless of the kinds of the substituents. Embodiments include, for example, an embodiment where the average fiber diameter is in micro-order (an embodiment 1) and an embodiment where the average fiber diameter is in nano-order (an embodiment 2).

The cellulose fiber composite of the embodiment 1 is preferably 5 μm or more, more preferably 7 μm or more, and even more preferably 10 μm or more, from the viewpoint of handling property, availability and costs. In addition, the upper limit is, but not particularly set to, preferably 100 μm or less, more preferably 70 μm or less, even more preferably 50 μm or less, even more preferably 40 μm or less, and even more preferably 30 μm or less, from the viewpoint of handling property. The average fiber diameter of the cellulose fibers in the micro-order as used herein can be measured in accordance with the following method.

Specifically, a method includes, for example, a method including stirring cellulose fibers which were absolutely dried with a household mixer or the like in ion-exchanged water to defibrillate, and further adding ion-exchange water thereto while stirring to make an even aqueous dispersion, and analyzing a part of the aqueous dispersion obtained by

"Kajaani Fiber Lab" manufactured by Metso Automation. According to the above method, the average fiber diameter can be measured as the fiber diameters in the micro-order. Here, the detailed measurement method is as described in Examples.

The cellulose fiber composite of the embodiment 2 is preferably 1 nm or more, more preferably 3 nm or more, even more preferably 10 nm or more, and even more preferably 20 nm or more, from the viewpoint of improved heat resistance, handling property, availability, and costs, and the cellulose fiber composite is preferably 500 nm or less, more preferably 300 nm or less, even more preferably 200 nm or less, even more preferably 150 nm or less, and still even more preferably 120 nm or less, from the viewpoint of handling property, dimensional stability, dispersibility in a solvent, and exhibition of thickening property. Here, the average fiber diameter of the cellulose fibers in the nano-order as used herein can be measured in accordance with the following method.

Specifically, a fiber diameter in a nano-order can be measured by observing a dispersion obtained by a finely fibrillating treatment with an optical microscope manufactured by KEYENCE, "Digital Microscope VHX-1000" at a magnification of from 300 to 1,000 folds, and calculating an average of 30 or more of fiber strands. In a case where an observation with an optical microscope is difficult, a dispersion prepared by further adding a solvent to the above dispersion is dropped on mica and dried to provide an observation sample, and a measurement can be taken with an atomic force microscope (AFM), Nanoscope III Tapping mode AFM, manufactured by Digital Instrument, using probe Point Probe (NCH) manufactured by NANOSENSORS. Generally, a minimum unit of cellulose nanofibers prepared from higher plants is packed in nearly square form having sizes of 6 $\times$ 6 molecular chains, so that the height analyzed in the image according to the AFM can be assumed to be a width of the fibers. Here, the detailed method for measurement is as described in Examples.

< Crystallinity >

The crystallinity of the cellulose fiber composite is preferably 10% or more, more preferably 15% or more, even more preferably 20% or more, and even more preferably 40% or more, from the viewpoint of exhibiting strength. Also, the crystallinity is preferably 90% or less, more preferably 85% or less, even more preferably 80% or less, and even more preferably 75% or less, from the viewpoint of availability of the raw materials. Here, the crystallinity of the cellulose as used herein refers to a cellulose I crystallinity which is calculated from diffraction intensity values according to X-ray diffraction method, which is defined by the following calculation formula (A):

$$\text{Cellulose I Crystallinity, \%} = [(I22.6 - I18.5)/I22.6] \times 100 \qquad (A)$$

wherein 122.6 is a diffraction intensity of a lattice face (002 face)(angle of diffraction 2θ = 22.6°), and I18.5 is a diffraction intensity of an amorphous portion (angle of diffraction 2θ = 18.5°), in X-ray diffraction.

Here, cellulose I is a crystalline form of a natural cellulose, and the cellulose I crystallinity means a proportion of the amount of crystalline region that occupies the entire cellulose.

[Method for Producing Cellulose Fiber Composite]

The cellulose fiber composite usable in the present invention can be produced in accordance with a known method without particular limitations, so long as a modifying group can be introduced to cellulose fibers as mentioned above. Here, the cellulose fibers as used herein can be prepared as cellulose fibers containing carboxy groups in which an aldehyde is removed by subjecting to an additional oxidation treatment or a reduction treatment mentioned above by referring to a known method, for example, a method described in Japanese Patent Laid-Open No. 2011-140632.

Specific production methods include the following two embodiments depending upon embodiments of introducing a modifying group to cellulose fibers. Specifically, the embodiments include:

an embodiment of binding a modifying group to cellulose fibers via an ionic bonding (embodiment A); and
an embodiment of binding a modifying group to cellulose fibers via a covalent bonding (embodiment B).
Here, a case of an amide bonding is given hereinbelow as a covalent bonding.

[Embodiment A]

step (1): oxidizing natural cellulose fibers in the presence of an N-oxyl compound, to provide carboxy group-containing

cellulose fibers;

step (2): subjecting the carboxy group-containing cellulose fibers obtained in the step (1) to an additional oxidation treatment or a reduction treatment, to provide carboxy group-containing cellulose fibers in which an aldehyde group is reduced; and

step (3A): mixing the carboxy group-containing cellulose fibers in which an aldehyde group is reduced obtained in the step (2) and a compound having a modifying group.

[Embodiment B]

step (1): oxidizing natural cellulose fibers in the presence of an N-oxyl compound, to provide carboxy group-containing cellulose fibers; and

step (2): subjecting the carboxy group-containing cellulose fibers obtained in the step (1) to an additional oxidation treatment or a reduction treatment, to provide carboxy group-containing cellulose fibers in which an aldehyde group is reduced; and

step (3B): subjecting the carboxy group-containing cellulose fibers in which an aldehyde group is reduced obtained in the step (2) and a compound having a modifying group to an amidation reaction.

The method of introducing a modifying group can be carried out by referring to, for example, a method described in Japanese Patent Laid-Open No. 2015-143336 for the embodiment A, or to a method described in Japanese Patent Laid-Open No. 2015-143337 for the embodiment B. In addition, in the present invention,

a method including, subsequent to the step (1), carrying out a finely fibrillating step described later, to provide carboxy group-containing fine cellulose fibers, and thereafter carrying out a step (2) (First Production Embodiment); and

a method including carrying out sequentially from the step (1) to the step (3A or 3B), and subsequently carrying out a finely fibrillating step, to provide a cellulose fiber composite (Second Production Embodiment), may be carried out.

The method for producing a cellulose fiber composite will be explained hereinbelow on the basis of First Production Embodiment of the embodiment A.

[Step (1)]

The step (1) is a step of oxidizing natural cellulose fibers in the presence of an N-oxyl compound, to provide carboxy group-containing cellulose fibers. Specifically, natural cellulose fibers are subjected to an oxidation treatment step (for example, an oxidation treatment with 2,2,6,6-tetramethylpiperidin-1-oxyl (TEMPO)), described in Japanese Patent Laid-Open No. 2015-143336 or 2015-143337 and (optionally) a purifying step, thereby obtaining carboxy group-containing cellulose fibers having a carboxy group content of preferably 0.1 mmol/g or more.

The natural cellulose fibers which are raw materials include, for example, wooden pulp such as pulp from needle-leaf trees and pulp from broad-leaf trees; cotton pulp such as cotton linter and cotton lint; non-wooden pulp such as maize straw pulp and bagasse pulp; bacteria cellulose; and the like. These natural cellulose fibers can be used alone or in a combination of two or more kinds. The natural cellulose fibers may be subjected to a treatment of increasing surface areas such as treatment with a beater. In addition, the cellulose I crystallinity of the above-mentioned commercially available pulp is usually 80% or more.

(Finely Fibrillating Step)

Next, in First Production Embodiment, after the purifying step, a step of finely fibrillating the carboxy group-containing cellulose fibers obtained in the step (1) is carried out, to provide fine carboxy group-containing cellulose fibers. In the finely fibrillating step, it is preferable that the carboxy group-containing cellulose fibers obtained through the above-mentioned purifying step are dispersed in a solvent, and subjected to a finely fibrillating treatment.

The solvent used as a dispersion medium is exemplified by water; an alcohol having from 1 to 6 carbon atoms, and preferably from 1 to 3 carbon atoms, such as methanol, ethanol, or propanol; a ketone having from 3 to 6 carbon atoms, such as acetone, methyl ethyl ketone or methyl isobutyl ketone; a linear or branched, saturated hydrocarbon or unsaturated hydrocarbon having from 1 to 6 carbon atoms; an aromatic hydrocarbon such as benzene or toluene; a halogenated hydrocarbon such as methylene chloride or chloroform; a lower alkyl ether having from 2 to 5 carbon atoms; a polar solvent such as N,N-dimethylformamide, N,N-dimethylacetamide, dimethyl sulfoxide, or a diester of succinic acid and triethylene glycol monomethyl ether, and the like. These solvents can be used alone or in a mixture of two or more

kinds. The solvent is preferably water, an alcohol having from 1 to 6 carbon atoms, a ketone having from 3 to 6 carbon atoms, a lower alkyl ether having from 2 to 5 carbon atoms, or a polar solvent such as N,N-dimethylformamide, N,N-dimethylacetamide, dimethyl sulfoxide, or a diester of succinic acid and methyl triglycol[sic], from the viewpoint of operability of the finely fibrillating treatment, and more preferably water, from the viewpoint of environmental-friendliness. The amount of the solvent used is not particularly limited, so long as the amount used is an effective amount that can disperse the carboxy group-containing cellulose fibers. The solvent is used in an amount of preferably from 1 to 500 times the mass, and more preferably from 2 to 200 times the mass, based on the carboxy group-containing cellulose fibers.

As an apparatus to be used in the finely fibrillating treatment, a known dispersing machine is suitably used. For example, a disintegrator, a beating machine, a low-pressure homogenizer, a high-pressure homogenizer, a grinder, a cutter mill, a ball-mill, a jet mill, a short shaft extruder, a twin-screw extruder, an ultrasonic agitator, a juice mixer for households, or the like can be used. In addition, the solid content concentration of the reaction product fibers in the finely fibrillating treatment is preferably 50% by mass or less.

[Step (2)]

The step 2 is a step of subjecting the carboxy group-containing cellulose fibers obtained in the step (1) to an additional oxidation treatment or a reduction treatment, to provide carboxy group-containing cellulose fibers in which an aldehyde group is reduced. The method for the additional oxidation treatment or the reduction treatment can be referred to the section of the cellulose fiber composite mentioned above.

Thus, a hydroxyl group at C6 position of the cellulose constituting unit is selectively converted to a carboxy group via an aldehyde group, and the aldehyde group is further subjected to an oxidization treatment or a reduction treatment, whereby fine cellulose fibers made of a cellulose in which the aldehyde group is substituted to a carboxy group or a hydroxyl group can be obtained.

[Step (3A)]

In First Production Embodiment, the step (3A) is a step of mixing the carboxy group-containing cellulose fibers in which an aldehyde group is reduced obtained through the above steps and a compound having a modifying group, to provide a cellulose fiber composite. Specifically, the above carboxy group-containing cellulose fibers in which an aldehyde group is reduced, and a compound having a modifying group may be mixed in a solvent; for example, a cellulose fiber composite can be produced in accordance with a method described in Japanese Patent Laid-Open No. 2015-143336.

The compound having a modifying group usable in the step (3A) includes those that are mentioned above in the cellulose fiber composite.

The amount of the above compound used can be determined according to the desired binding amount of the modifying group in the cellulose fiber composite, and the compound is used in an amount such that the amine groups, based on one mol of the carboxy groups contained in the carboxy group-containing cellulose fibers in which an aldehyde group is reduced are used in an amount of preferably 0.01 mol or more, more preferably 0.1 mol or more, even more preferably 0.5 mol or more, even more preferably 0.7 mol or more, and even more preferably 1 mol or more, from the viewpoint of reactivities, and that the amine groups are used in an amount of preferably 50 mol or less, more preferably 20 mol or less, and even more preferably 10 mol or less, from the viewpoint of manufactured article purity. Here, the compounds in an amount contained in the above range may be supplied to the reaction at once, or may be supplied in divided portions. When the compound is a monoamine, the above amine groups are the same as the amine.

As the solvent, it is preferable to select a solvent that dissolves a compound used, and the solvent includes, for example, methanol, ethanol, isopropanol (IPA), N,N-dimethylformamide (DMF), dimethyl sulfoxide (DMSO), N,N-dimethylacetamide, tetrahydrofuran (THF), diester of succinic acid and triethylene glycol monomethyl ether, acetone, methyl ethyl ketone (MEK), acetonitrile, dichloromethane, chloroform, toluene, acetic acid, water, and the like. These solvents can be used alone or in a combination of two or more kinds. Among these polar solvents, diester of succinic acid and triethylene glycol monomethyl ether, ethanol, DMF, and water are preferred.

The temperature during mixing is preferably 0°C or higher, more preferably 5°C or higher, and even more preferably 10°C or higher, from the viewpoint of reactivities of the compound. In addition, the temperature is preferably 50°C or lower, more preferably 40°C or lower, and even more preferably 30°C or lower, from the viewpoint of coloration of the composite. The mixing time can be appropriately set depending upon the kinds of the compounds and solvents used, and the mixing time is preferably 0.01 hours or more, more preferably 0.1 hours or more, and even more preferably 1 hour or more, from the viewpoint of reactivities of the compound, and the mixing time is preferably 48 hours or less, and more preferably 24 hours or less, from the viewpoint of productivity.

After the salt formation mentioned above, appropriate post-treatments may be carried out in order to remove unreacted compounds and the like. As the method for post-treatments, for example, filtration, centrifugation, dialysis, or the like can be used.

In addition, in the production method of the embodiment B, the steps (1) and (2) can be carried out in the same manner as in Embodiment A, so that the step (3B) in First Production Embodiment will be described hereinbelow. For example, the compound can be produced by a method described in Japanese Patent Laid-Open No. 2013-151661.

[Step (3B)]

In First Production Embodiment, the step (3B) is a step of subjecting the carboxy group-containing cellulose fibers in which an aldehyde group is reduced obtained through the above-mentioned steps and a compound having a modifying group to an amidation reaction, to provide a cellulose fiber composite. As the above mixing method, there would be no problems so long as the raw materials are mixed to an extent that are reactive. Specifically, the above raw materials are mixed in the presence of a condensing agent, so that a carboxy group contained in carboxy group-containing cellulose fibers in which an aldehyde group is reduced and an amino group of the compound having a modifying group are subjected to a condensation reaction, to form an amide bonding.

The compound having a modifying group usable in the step (3B) includes those listed above in the cellulose fiber composite mentioned above.

In the step (3B), the carboxy group-containing cellulose fibers in which an aldehyde group is reduced and a compound having a modifying group are subjected to amidation in the presence of a condensing agent.

The amount of the above compound having a modifying group used is an amount such that the amine groups, based on one mol of the carboxy groups contained in the carboxy group-containing cellulose fibers in which an aldehyde group is reduced are used in an amount of preferably 0.1 mol or more, and more preferably 0.5 mol or more, from the viewpoint of reactivities, and that the amine groups are used in an amount of preferably 50 mol or less, more preferably 20 mol or less, and even more preferably 10 mol or less, from the viewpoint of manufactured article purity. Here, the compounds in an amount contained in the above range may be supplied to the reaction at once, or may be supplied in divided portions.

The condensing agent is not particularly limited, and includes condensing agents described in Gosei Kagaku Shirizu Pepuchido Gosei (Synthetic Chemistry Series Peptide Synthesis) (Maruzen Publishing), page 116, or described in Tetrahedron, 57, 1551(2001), and the like. The condensing agent includes, for example, 4-(4,6-dimethoxy-1,3,5-triazin-2-yl)-4-methylmorpholinium chloride (may be hereinafter referred to as "DMT-MM" in some cases), and the like.

In the above amidation reaction, the solvent includes those in the above finely fibrillating step, and it is preferable to select a solvent that dissolves a compound used.

The reaction time and the reaction temperature in the above amidation reaction can be appropriately selected in accordance with the kinds of the compounds used and the solvents used and the like. The reaction time is preferably from 1 to 24 hours, and more preferably from 10 to 20 hours, from the viewpoint of reaction ratio. Also, the reaction temperature is preferably 0°C or higher, more preferably 5°C or higher, and even more preferably 10°C or higher, from the viewpoint of reactivities. In addition, the reaction temperature is preferably 200°C or lower, more preferably 80°C or lower, and even more preferably 30°C or lower, from the viewpoint of the coloration of the composite.

After the above reaction, post-treatments may be appropriately carried out in order to remove unreacted compounds, the condensing agent, and the like. As the method for post-treatments, for example, filtration, centrifugation, dialysis, or the like can be used.

Here, in both Embodiment A and Embodiment B, in Second Production Embodiment, each of the steps mentioned above can be carried out in the same manner as First Production Embodiment except that the steps are carried out in the order of the step (1), the step (2), the step (3A) or step (3B), and the finely fibrillating step.

In addition, the cellulose fiber composite may be obtained by combining Embodiments A and B, specifically, the cellulose fiber composite may be a cellulose fiber composite having a modifying group connected via an ionic bonding and a modifying group connected via an amide bonding. In this case, either the step (3A) or (3B) may be carried out first.

Thus, a cellulose fiber composite having an aldehyde group content of 0.15 mmol/g or less in which a modifying group is connected to cellulose fibers via an ionic bonding and/or a covalent bonding can be obtained.

The cellulose fiber composite obtained can be used in a state of a dispersion after carrying out the above post-treatments. Alternatively, solvents are removed from the dispersion by a drying treatment or the like, to provide a dried cellulose fiber composite in a powder form, and this powder can also be used. Here, the "powder form" is a powder form in which the cellulose fiber composites are aggregated, and does not mean the cellulose particles.

The cellulose fiber composite in a powder form includes, for example, a dried product obtained by directly drying a dispersion of the above-mentioned cellulose fiber composite; a powdered product obtained by a mechanical treatment of the dried product; a powdered product obtained by powdering a dispersion of the above-mentioned cellulose fiber composite according to a known spray-drying method; a powdered product obtained by powdering a dispersion of the above-mentioned cellulose fiber composite according to a known freeze-drying method; and the like. The above spray-drying method is a method including spraying the above-mentioned dispersion of a cellulose fiber composite in the air, and drying the dispersion.

[Resin]

As the resin in the present invention, a thermoplastic resin, a curable resin, or an elastomeric resin can be used. Specifically, the resin is:

an elastomeric resin and is a diene-based rubber or a non-diene-based rubber,
a thermoplastic resin and is a (meth)acrylic resin,
a thermosetting resin and is an epoxy resin or a polyurethane resin, or
a photocurable resin including a urethane (meth)acrylate oligomer or resin.

Described herein are also the following thermoplastic resins. Thermoplastic resins include saturated polyester resins such as polylactic acid resins, olefinic resins such as polyethylene resins and polypropylene resins, vinyl chloride resins, styrene resins, (meth)acrylic resins, vinyl ether resins, polyvinyl alcohol resins, polyvinyl acetal resins, polyvinyl acetate resins, polyamide resins, polycarbonate resins, polysulfonate resins and the like. These thermoplastic resins may be used alone or may be used as mixed resins of two or more kinds. Among them, the saturated polyester resins, the olefin resins, the vinyl chloride resins, styrene resins, the (meth)acrylic resins, and the polyamide resins are preferred, from the viewpoint of obtaining a resin composition having excellent heat resistance. Here, the term (meth)acrylic resin as used herein means to embrace methacrylic resins and acrylic resins.

As the (meth)acrylic resin, those containing 50% by mass or more of methyl (meth)acrylate as a monomer unit, on the basis of a total of the monomer units of the entire polymer constituting the resin are preferred, and a methacrylic resin is more preferred.

The methacrylic resin can be produced by copolymerizing methyl methacrylate and other monomer copolymerizable therewith. The polymerization method is not particularly limited, and includes, for example, a bulk polymerization method, a solution polymerization method, a suspension polymerization method, a casting polymerization method, e.g. a cell casting polymerization method, and the like, and the casting polymerization method, e.g. a cell casting polymerization method, is preferred, from the viewpoint of productivity. In addition, the methacrylic resin having excellent heat resistance is obtained by subjecting a polymerizable mixture containing the above monomer mixture and a radical polymerization initiator to a polymerization reaction.

The curable resin is preferably a photo-curable resin and/or a thermosetting resin.

The photo-curable resin allows to progress the polymerization reaction by active energy ray irradiation of ultraviolet rays or electron beams, using a photopolymerization initiator that generates a radical or a cation.

The above photopolymerization initiator includes, for example, acetophenones, benzophenones, ketals, anthraquinones, thioxanthones, azo compounds, peroxides, 2,3-dialkylthione compounds, disulfide compounds, thiuram compounds, fluoroamine compounds, and the like. More specific examples include 1-hydroxy-cyclohexyl-phenyl-ketone, 2-methyl-1[4-(methylthio)phenyl]-2-morpholinopropan-1-one, benzyl methyl ketone, 1-(4-dodecylphenyl)-2-hydroxy-2-methylpropan-1-one, 1-(4-isopropylphenyl)-2-hydroxy-2-hydroxy-2-methylpropan-1-one, benzophenone, and the like. Among them, 1-hydroxy-cyclohexyl-phenyl-ketone is preferred, from the viewpoint of improving antistatic property, waterproofness, transparency, and rubbing resistance.

With the photopolymerization initiator, for example, a monomer (monofunctional monomer, polyfunctional monomer), or an oligomer or resin or the like, having a reactive unsaturated group can be polymerized.

The monofunctional monomer includes, for example, (meth)acrylic monomers such as (meth)acrylic acid esters; vinyl-based monomers such as vinyl pyrrolidone; (meth)acrylates having a bridged cyclohydrocarbon group such as isobornyl (meth)acrylate and adamantyl (meth)acrylate; and the like. The polyfunctional monomer contains a polyfunctional monomer having 2 to 8 or so polymerizable groups, and the bifunctional monomer includes, for example, di(meth)acrylates having a bridged cyclohydrocarbon group such as ethylene glycol di(meth)acrylate and propylene glycol di(meth)acrylate, and the like. The tri- to octo-functional monomer includes, for example, glycerol tri(meth)acrylate, and the like.

Examples of the oligomer or resin having a reactive unsaturated group include (meth)acrylates of alkylene oxide adducts of bisphenol A, epoxy (meth)acrylates (bisphenol A type epoxy (meth)acrylate, novolak type epoxy (meth)acrylate, etc.), polyester (meth)acrylates (e.g., aliphatic polyester-type (meth)acrylates, aromatic polyester-type (meth)acrylates, etc.), urethane (meth)acrylates (polyester-type urethane (meth)acrylates, polyether-type urethane (meth)acrylates, etc.), silicone (meth)acrylates, and the like. The above oligomer or resin may be used together with the above monomer.

The photo-curable resin is preferred, from the viewpoint of providing a resin composition having a smaller amount of aggregates, and having excellent transparency.

Described herein are also the following thermosetting resins. Thermosetting resins include, for example, epoxy resins; phenol resins; urea resins; melamine resins; unsaturated polyester resins; diallyl phthalate resins; polyurethane resins; silicone resins; polyimide resins; and the like. The thermosetting resin can be used alone or in a combination of two

or more kinds. Among them, the epoxy resins, the phenolic resins, the urea resins, the melamine resins, the unsaturated polyester resins, and the polyurethane resins are preferred, and the epoxy resins are more preferred, from the viewpoint of obtaining a resin composition having excellent heat resistance.

When an epoxy resin is used in the above resin component, it is preferable to use a curing agent. By blending a curing agent, molding materials obtained from the resin composition can be firmly molded, whereby the mechanical strength can be improved. Here, the content of the curing agent may be appropriately set depending upon the kinds of the curing agents used.

Described herein are also the following cellulosic resins. Cellulosic resins include organic acid esters of cellulose mixed acylates such as cellulose acetate and cellulose acetate propionate; inorganic acid esters such as nitrate cellulose and phosphate cellulose; mixed acid esters of organic acid-inorganic acid such as acetate nitrate cellulose; cellulose ether esters such as acetylated hydroxypropyl cellulose; and the like. The above cellulose acetate includes cellulose triacetate (degree of acetyl substitution: 2.6 to 3), cellulose diacetate (degree of acetyl substitution: 2 or more and less than 2.6), and cellulose monoacetate. Among the above cellulosic resins, the organic acid esters of cellulose are preferred, and cellulose acetates (e.g., cellulose triacetate and cellulose diacetate) are more preferred, from the viewpoint of obtaining a resin composition having excellent heat resistance. The cellulosic resins may be used alone or in a combination of two or more kinds.

In the present invention, an elastomeric resin can be used. As the elastomeric resin, the carbon black blend product is widely used as a reinforcing material in order to increase the strength, but the reinforcing effects are considered to have some limitations. However, in the present invention, it is considered as follows. Since the cellulose fiber composite of the present invention is blended with the elastomeric resin, it is considered that the dispersibility in the rubber composition obtained becomes excellent, thereby making it possible to provide a resin composition having excellent mechanical strength and heat resistance.

As the elastomeric resin, a diene-based rubber or a non-diene-based rubber is used.

The diene-based rubber includes natural rubbers, polyisoprene rubbers, polybutadiene rubbers, styrene-butadiene copolymer rubbers, butyl rubbers, butadiene-acrylonitrile copolymer rubbers, chloroprene rubbers, modified natural rubbers, and the like. The modified natural rubber includes epoxidized natural rubbers, hydrogenated natural rubbers, and the like. The non-diene-based rubber includes butyl rubbers, ethylene-propylene rubbers, ethylene-propylene-diene rubbers, urethane rubbers, silicone rubbers, fluorine-containing rubbers, acrylic rubbers, vulcanized rubbers, epichlorohydrin rubbers, and the like. These can be used alone or in a combination of two or more kinds. Among them, one or more members selected from natural rubbers, polyisoprene rubbers, polybutadiene rubbers, styrene-butadiene copolymer rubbers, chloroprene rubbers, and modified natural rubbers are preferred, and one or more members selected from natural rubbers, styrene-butadiene copolymer rubbers, chloroprene rubbers, and modified natural rubbers are more preferred, from the viewpoint of satisfying both excellent workability and high-impact resilience of the rubber composition.

The content of the resin in the resin composition, the amount of the cellulose fiber composite based on the resin, and the amount of the cellulose fibers based on the resin (conversion amount) depend on the kinds of the resins, which are as follows.

The content of the resin in the resin composition of the present invention is preferably 50% by mass or more, more preferably 60% by mass or more, even more preferably 70% by mass or more, even more preferably 80% by mass or more, and even more preferably 85% by mass or more, from the viewpoint of producing a molded article, and the content is preferably 99% by mass or less, more preferably 98% by mass or less, even more preferably 95% by mass or less, and even more preferably 90% by mass or less, from the viewpoint of including the cellulose fiber composite or the like.

The content of the cellulose fiber composite in the resin composition of the present invention is preferably 0.1% by mass or more, more preferably 0.5% by mass or more, even more preferably 1% by mass or more, even more preferably 2% by mass or more, even more preferably 3% by mass or more, and even more preferably 5% by mass or more, from the viewpoint of mechanical strength, dimensional stability, and heat resistance of the resin composition obtained, and the content is preferably 50% by mass or less, more preferably 40% by mass or less, even more preferably 30% by mass or less, even more preferably 20% by mass or less, even more preferably 15% by mass or less, and even more preferably 13% by mass or less, from the viewpoint of transparency of the resin composition obtained.

The amount of the cellulose fiber composite in the resin composition of the present invention, based on 100 parts by mass of the resin, is preferably 0.1 parts by mass or more, more preferably 1 part by mass or more, even more preferably 2 parts by mass or more, even more preferably 3 parts by mass or more, and even more preferably 5 parts by mass or more, from the viewpoint of mechanical strength, dimensional stability, and heat resistance of the resin composition obtained, and the amount is preferably 100 parts by mass or less, more preferably 70 parts by mass or less, even more preferably 50 parts by mass or less, even more preferably 30 parts by mass or less, even more preferably 20 parts by mass or less, and even more preferably 15 parts by mass or less, from the viewpoint of transparency of the resin composition obtained.

The amount of the cellulose fibers (conversion amount) in the resin composition of the present invention, based on 100 parts by mass of the resin, is preferably 0.1 parts by mass or more, more preferably 1 part by mass or more, even

more preferably 2 parts by mass or more, and even more preferably 5 parts by mass or more, from the viewpoint of mechanical strength and the like of the resin composition obtained, and the amount is preferably 100 parts by mass or less, more preferably 70 parts by mass or less, even more preferably 50 parts by mass or less, even more preferably 30 parts by mass or less, and even more preferably 20 parts by mass or less, from the viewpoint of transparency of the resin composition obtained.

The resin composition of the present invention can contain a plasticizer in addition to the above components.

The plasticizer is not particularly limited, and includes conventionally known plasticizers which are polycarboxylic acid esters such as phthalic acid esters, succinic acid esters, and adipic acid esters; fatty acid esters of an aliphatic polyol such as glycerol; and the like. Among them, an ester compound containing two or more ester groups in the molecule, the ester compound in which at least one kind of the alcohol component constituting the ester compound is an adduct of an alcohol reacted with an alkylene oxide having from 2 to 3 carbon atoms in an amount of from 0.5 to 5 mol on average, per one hydroxyl group, is preferred. Specific examples include plasticizers listed in Japanese Patent Laid-Open Nos. 2008-174718 and 2008-115372.

The content of the plasticizer, based on 100 parts by mass of the resin, is preferably 1 part by mass or more, more preferably 3 parts by mass or more, and even more preferably 5 parts by mass or more, from the viewpoint of improving heat resistance of the molded article when formed into a molded article, and the content is preferably 30 parts by mass or less, more preferably 20 parts by mass or less, and even more preferably 15 parts by mass or less, from the same viewpoint.

Since the cellulose fiber composite of the present invention has a smaller amount of aggregates and excellent transparency by dispersing in a plasticizer, the cellulose fiber composite can be suitably used in the production of a resin composition containing a thermosetting resin or curable resin mentioned above and a cellulose fiber composite.

The resin composition of the present invention can contain, as other components besides those mentioned above, a crystal nucleating agent, a filler including an inorganic filler and an organic filler, a hydrolysis inhibitor, a flame retardant, an antioxidant, a lubricant such as a hydrocarbon wax or an anionic surfactant, an ultraviolet absorbent, an antistatic agent, an anti-clouding agent, a photo stabilizer, a pigment, a mildewproof agent, a bactericidal agent, a blowing agent, or a surfactant; a polysaccharide such as starch or alginic acid; a natural protein such as gelatin, glue, or casein; an inorganic compound such as tannin, zeolite, ceramics, or a metal powder; a perfume; a fluidity modulator; a leveling agent; an electroconductive agent; an ultraviolet dispersant; a deodorant; or the like, within the range that would not impair the effects of the present invention. In addition, similarly, other polymeric materials and other resin compositions can be properly added within the range that would not impair the effects of the present invention. As to the content proportion of the optional additives, the optional additives may be properly contained within the range that would not impair the effects of the present invention, and the content proportion of the optional additives is, for example, preferably of 10% by mass or so or less, and more preferably 5% by mass or so or less, of the resin composition.

In addition, when the resin composition of the present invention contains an elastomeric resin, the resin composition can be optionally blended with various additives generally blended in tires and other rubbers as other components besides those mentioned above that are ordinarily used in the rubber industries, including fillers for reinforcements such as carbon black or silica, various chemicals including, for example, a vulcanizing agent, a vulcanization accelerator, an aging inhibitor, a scorching inhibitor, magnesium oxide, zinc oxide, stearic acid, a process oil, a vegetable fat or oil, a plasticizer or the like in a conventional general amount within the range that would not impair the object of the present invention.

The resin composition of the present invention contains a resin and a cellulose fiber composite mentioned above, and the resin composition can be easily prepared by blending the resin and the cellulose fiber composite. For example, raw materials containing a thermoplastic resin or curable resin, and a cellulose fiber composite, and further optionally various additives may be mixed with a Henschel mixer or a co-rotating agitator, or melt-kneaded with a known kneader such as a tightly closed kneader, a single-screw or twin-screw extruder, or an open roller-type kneader.

In addition, when the resin composition of the present invention contains an elastomeric resin, the resin composition contains a rubber and modified cellulose fibers mentioned above, and the resin composition can be easily prepared by blending the rubber and the cellulose fiber composite. For example, raw materials containing a rubber and a cellulose fiber composite, and further optional various additives may be mixed with, for example, an open-type kneader such as a roller, or a closed-type kneader such as a Banbury mixer. The temperature during the melting and mixing is usually from 10° to 200°C, and preferably from 20° to 180°C. In addition, a solution prepared by dissolving a rubber and a cellulose fiber composite with an organic solvent may be prepared, and thereafter the resin composition may be prepared by removing an organic solvent component.

The resin composition thus obtained does not substantially contain water, and the resin composition is preferably non-aqueous. The water content of the resin composition is preferably 2% by mass or less, more preferably 0.5% by mass or less, and even more preferably substantially 0% by mass. Here, substantially 0% by mass refers to a case of containing a trace amount of water inevitably. Here, the water content as used herein is specifically measured by a method described in Examples set forth below.

Since the resin composition of the present invention has favorable workability and excellent heat resistance, the resin composition can be suitably used in various applications such as daily sundries, household electric appliance parts and automobile parts. Specifically, the resin composition can be suitably used in wrapping materials for daily sundries, cosmetics, household electric appliances, and the like; electronic materials constituting electronic parts and the like; food containers such as blistered packs and trays, and lids for lunch boxes; industrial trays used in transportation or protections of industrial parts; automobile parts such as dashboards, instrumental panels, and floor; and the like.

[Resin Molded Article]

The resin molded article can be produced by appropriately applying a known molding method such as extrusion-molding, injection-molding, press molding, casting molding, or solvent casting to a resin composition of the present invention. For example, a molded article according to the applications can be obtained by injecting or applying to a package, a substrate or the like, and drying to cure.

When a sheet-like molded article is produced, the thickness thereof is preferably 0.05 mm or more, more preferably 0.08 mm or more, and even more preferably 0.1 mm or more, from the viewpoint of workability, and preferably 1.5 mm or less, more preferably 1.0 mm or less, and even more preferably 0.5 mm or less.

Since the molded article of the resin composition of the present invention thus obtained has excellent mechanical strength and excellent heat resistance, the molded article can be suitably used in various applications listed in the above resin composition.

## EXAMPLES

The present invention will be described more specifically by means of the following Examples and Comparative Examples, without intending to limit the present invention to the following Examples. Parts in Examples are parts by mass unless specified otherwise. Here, "ambient pressure" means 101.3 kPa, and "ambient temperature (room temperature)" means 25°C.

[Average Fiber Diameter of Cellulose Fibers]

Water is added to fine cellulose fibers to provide a dispersion of which concentration is 0.0001% by mass. The dispersion is added dropwise to mica (mica), and dried to provide an observation sample. A fiber height of the cellulose fibers in the observation sample is measured with an atomic force microscope (AFM), Nanoscope III Tapping mode AFM, manufactured by Digital Instrument, a probe used being Point Probe (NCH) manufactured by NANOSENSORS. During that measurement, 5 or more sets of cellulose fibers are extracted from a microscopic image in which the cellulose fibers can be confirmed, and an average fiber diameter is calculated from the fiber heights of the fibers.

[Carboxy Group Contents of Cellulose Fibers and Cellulose Fiber Composite]

Cellulose fibers or a cellulose fiber composite with the mass of 0.5 g on a dry basis is placed in a 100 mL beaker, ion-exchanged water or a mixed solvent of methanol/water = 2/1 is added thereto to make up a total volume of 55 mL. Five milliliters of a 0.01 M aqueous sodium chloride solution is added thereto to provide a dispersion, and the dispersion is stirred until the cellulose fibers or the cellulose fiber composite is sufficiently dispersed. A 0.1 M hydrochloric acid is added to this dispersion to adjust its pH to 2.5 to 3, and a 0.05 M aqueous sodium hydroxide solution is added dropwise to the dispersion with an automated titration instrument manufactured by DKK-TOA CORPORATION under the trade name of "AUT-50," under the conditions of a waiting time of 60 seconds. The values of electroconductivity and a pH are measured every minute, and the measurements are continued up to a pH of 11 or so to obtain an electroconductivity curve. A titrated amount of sodium hydroxide is obtained from this electroconductivity curve, and the carboxy group content of the cellulose fibers or the cellulose fiber composite is calculated in accordance with the following formula 1:

$$\text{Carboxy Group Content, mmol/g} = \text{Titrated Amount of Sodium Hydroxide} \times \text{Aqueous Sodium Hydroxide Solution Concentration (0.05 M)/Mass of Cellulose Fibers (0.5 g)} \quad \ldots \text{ formula 1}$$

[Aldehyde Group Content of Cellulose Fibers and Cellulose Fiber Composite]

To a beaker are added 100.0 g of cellulose fibers or a cellulose fiber composite, a solid content concentration of which is 1.0% by mass, an acetate buffer, pH 4.8, 0.33 g of 2-methyl-2-butene, and 0.45 g of sodium chlorite, and the contents are stirred at room temperature for 16 hours. After the termination of the reaction, a reaction mixture is washed with ion-exchanged water, to provide cellulose fibers or a cellulose fiber composite of which aldehyde is subjected to an oxidization treatment. A liquid reaction mixture is subjected to a freeze-drying treatment, and a carboxy group content of the cellulose fibers or the cellulose fiber composite of a dried product obtained is measured in accordance with the method described above, and a carboxy group content of the cellulose fibers or the cellulose fiber composite subjected to an oxidization treatment is calculated. Subsequently, an aldehyde group content of the cellulose fibers or the cellulose fiber composite is calculated according to the formula 2:

$$\text{Aldehyde Group Content, mmol/g} = (\text{Carboxy Group Content of Cellulose Fibers or Cellulose Fiber Composite Subjected to Oxidization Treatment}) - (\text{Carboxy Group Content of Cellulose Fibers or Cellulose Fiber Composite}) \quad \ldots \text{ formula 2}$$

[Water Content of Resin Composition]

Using a halogen moisture balance MOC-120H, manufactured by Shimadzu Corporation, measurements with a one-gram sample are taken in a thermostat held at 150°C every 30 seconds, and a value at which a weight loss is 0.1% or less is defined as a solid content concentration, and a water concentration is obtained by the following formula:

$$\text{Water Concentration, \%} = 100 - \text{Solid Content Concentration, \%}$$

Preparation Example 1 of Fine Cellulose Fibers - Dispersion of Carboxy Group-Containing Fine Cellulose Fibers Obtained by Treating Natural Cellulose with N-Oxyl Compound

Needle-leaf bleached kraft pulp manufactured by Fletcher Challenge Canada Ltd., under the trade name of "Machenzie," CSF 650 ml, was used as natural cellulose fibers. As TEMPO, a commercially available product manufactured by ALDRICH, Free radical, 98% by mass, was used. As sodium hypochlorite, a commercially available product manufactured by Wako Pure Chemical Industries, Ltd. was used. As sodium bromide, a commercially available product manufactured by Wako Pure Chemical Industries, Ltd. was used.

First, 100 g of the needle-leaf bleached kraft pulp fibers were sufficiently stirred in 9,900 g of ion-exchanged water, and 1.25 g of TEMPO, 12.5 g of sodium bromide, and 28.4 g of sodium hypochlorite were added in that order to 100 g of the mass of the pulp. Using a pH stud titration, a 0.5 M sodium hydroxide was added dropwise to keep a pH at 10.5. After the reaction was carried out at 20°C for 120 minutes, the dropwise addition of sodium hydroxide was stopped, to provide oxidized pulp. The oxidized pulp obtained was sufficiently washed with ion-exchanged water, and subsequently subjected to a dehydration treatment. Thereafter, 3.9 g of the oxidized pulp and 296.1 g of ion-exchanged water were subjected twice to a finely fibrillating treatment with a high-pressure homogenizer manufactured by Sugino Machine Limited, Starburstlabo HJP-2 5005 at 245 MPa, to provide a dispersion of carboxy group-containing fine cellulose fibers, a solid content concentration of which was 1.3% by mass. These fine cellulose fibers had an average fiber diameter of 3.3 nm, a carboxy group content of 1.62 mmol/g, and an aldehyde group content of 0.27 mmol/g.

Preparation Example 2 of Fine Cellulose Fibers - Dispersion of Carboxy Group-Containing Fine Cellulose Fibers in Which Aldehyde Group Was Subjected to Reduction Treatment

In a beaker, a 1 M aqueous sodium hydroxide solution was added to 3,846.15 g of a dispersion of carboxy group-containing fine cellulose fibers obtained in Preparation Example 1 of Fine Cellulose Fibers, a solid content concentration of

which was 1.3% by mass, to adjust a pH of the dispersion to 10 or so, the beaker was then charged with 2.63 g of sodium borohydride, and the contents were allowed to react at room temperature for 3 hours to carry out an aldehyde reduction treatment. After the termination of the reaction, 405 g of a 1 M aqueous hydrochloric acid solution and 4,286 g of ion-exchanged water were added to the reaction mixture, to provide a 0.7% by mass aqueous solution, and the contents were allowed to react at room temperature for one hour to allow protonation. After the termination of the reaction, the reaction mixture was washed with ion-exchanged water to remove hydrochloric acid and salt. The dispersion of a carboxy group-containing fine cellulose fibers of which aldehyde group was subjected to a reduction treatment, a solid content concentration of which was 2.0% by mass, obtained had an average fiber diameter of 3.3 nm, a carboxy group content of 1.62 mmol/g, and an aldehyde group content of 0.02 mmol/g.

Preparation Example 3 of Fine Cellulose Fibers - Dispersion of Carboxy Group-Containing Fine Cellulose Fibers Obtained by Acidic Treatment

In a beaker, 4,043 g of ion-exchanged water was added to 5300.00 g of a dispersion of carboxy group-containing fine cellulose fibers obtained in Preparation Example 1 of Fine Cellulose Fibers, a solid content concentration of which was 1.3% by mass, to provide a 0.7% by mass aqueous solution, and the aqueous solution was stirred with a mechanical stirrer at room temperature, 25°C, for 30 minutes. Subsequently, the beaker was charged with 558 g of a 1 M aqueous hydrochloric acid solution, and the contents were allowed to react for 1 hour at room temperature. After the termination of the reaction, the reaction mixture was washed with ion-exchanged water, to remove hydrochloric acid and salt, to provide a dispersion of acidic cellulose fibers in a state that the carboxy group-containing fine cellulose fibers were swollen, a solid content concentration of which was 1.8% by mass. The fine cellulose fibers had an average fiber diameter of 3.3 nm, a carboxy group content of 1.62 mmol/g, and an aldehyde group content of 0.27 mmol/g.

Preparation Example 4 of Fine Cellulose Fibers - Dispersion of Carboxy Group-Containing Fine Cellulose Fibers in Which Aldehyde Group Was Subjected to Oxidization Treatment

A beaker was charged with 769.23 g of a dispersion of carboxy group-containing fine cellulose fibers obtained in Preparation Example 1 of Fine Cellulose Fibers, a solid content concentration of which was 1.3% by mass, 250 g of an acetate buffer, pH 4.8, 4.50 g of sodium chlorite, and 3.30 g of 1-methyl-2-butene, and the contents were allowed to react at room temperature for 16 hours, to carry out an oxidization reaction of an aldehyde. After the termination of the reaction, the reaction mixture was washed with ion-exchanged water, and 80.0 g of a 1 M aqueous hydrochloric acid solution and 659 g of ion-exchanged water were added to the contents, to provide a 0.7% by mass aqueous solution. The contents were allowed to react at room temperature for one hour to allow protonation. After the termination of the reaction, the reaction mixture was washed with ion-exchanged water to remove hydrochloric acid and salt. The dispersion of a carboxy group-containing fine cellulose fibers of which aldehyde group was subjected to oxidation treatment, a solid content concentration of which was 2.0% by mass, obtained had an average fiber diameter of 3.3 nm, a carboxy group content of 1.81 mmol/g, and an aldehyde group content of 0.04 mmol/g.

Preparation Example 5 of Fine Cellulose Fibers - Dispersion of Carboxy Group-Containing Fine Cellulose Fibers Obtained by Treating Natural Cellulose with N-Oxyl Compound

The same procedures as in Preparation Example 1 were carried out except that the amounts were changed to 1.25 g of TEMPO, 12.5 g of sodium bromide, and 23.5 g of sodium hypochlorite to 100 g of the mass of pulp, to provide a dispersion of carboxy group-containing fine cellulose fibers, a solid content concentration of which was 1.2% by mass. The fine cellulose fibers had an average fiber diameter of 3.5 nm, a carboxy group content of 1.18 mmol/g, and an aldehyde group content of 0.17 mmol/g.

The properties of the carboxy group-containing fine cellulose fibers obtained in each of the preparation examples are summarized in Table 1.

[Table 1]

Table 1

| | Prep. Ex. 1 | Prep. Ex. 2 | Prep. Ex. 3 | Prep. Ex. 4 | Prep. Ex. 5 |
|---|---|---|---|---|---|
| Average Fiber Diameter, nm | 3.3 | 3.3 | 3.3 | 3.3 | 3.5 |
| Carboxy Group Content, mmol/g | 1.62 | 1.62 | 1.62 | 1.81 | 1.18 |

(continued)

| | Prep. Ex. 1 | Prep. Ex. 2 | Prep. Ex. 3 | Prep. Ex. 4 | Prep. Ex. 5 |
|---|---|---|---|---|---|
| Aldehyde Group Content, mmol/g | 0.27 | 0.02 | 0.27 | 0.04 | 0.17 |

Here, the aldehyde group content of the fine cellulose fiber composite prepared as mentioned below was the same as the aldehyde group content of the carboxy group-containing fine cellulose fibers obtained in the preparation examples. Specific values of the aldehyde group content of the fine cellulose fiber composite are shown in Tables 3 to 6.

Production Example of Amide Having EO/PO Copolymer Moiety - EOPO Copolymer Amine

A 1-L autoclave was charged with 132 g (1 mol) of propylene glycol tertiary butyl ether, the content was heated to 75°C, 1.2 g of a flake-like potassium hydroxide was added thereto, and the mixture was stirred to dissolve. Next, ethylene oxide (EO) and propylene oxide (PO) in amounts as listed in Table 2 were reacted at 110°C and 0.34 MPa, and 7.14 g of Magnesol 30/40, magnesium silicate, manufactured by The Dallas Group of America, was then supplied thereto and neutralized at 95°C. To the formed product obtained was added 0.16 g of di-tert-butyl-p-cresol, and mixed, and the mixture obtained was then filtered, to provide a polyether, which is an EO/PO copolymer.

On the other hand, the polyether obtained above (8.4 mL/min), ammonia (12.6 mL/min), and hydrogen (0.8 mL/min) were each supplied to a 1.250 mL tubular reaction vessel packed with a catalyst of nickel oxide/copper oxide/chromium oxide in a molar ratio of 75/23/2, Wako Pure Chemical Industries, Ltd. The temperature of the vessel was maintained at 190°C, and the pressure was maintained at 14 MPa. Thereafter, a crude discharged liquid mixture from the vessel was distilled off at 70°C and 3.5 mmHg for 30 minutes. A flask was charged with 200 g of an aminated polyether obtained and 93.6 g of a 15% aqueous hydrochloric acid solution, and the reaction mixture was heated at 100°C for 3.75 hours, to open tertiary butyl ether with the acid. Subsequently, the formed product was neutralized with 144 g of a 15% aqueous potassium hydroxide solution. Next, a neutralized formed product was distilled off under a reduced pressure at 112°C for one hour, and a residue was filtered, to provide a monoamine having an EO/PO copolymer moiety represented by the formula (i). Here, in the monoamine obtained, the EO/PO copolymer moiety is directly bound to the amine, so that $R_1$ in the formula (i) is a hydrogen atom.

Here, the molecular weight of the amine copolymer moiety is calculated as 2,000 by rounding off the value obtained by:

1409 [Molecular Weight of EO (44.03) x Number of Moles of EO Added (32)] + 522 [Molecular Weight of PO (58.04) x Number of Moles of PO Added (9)] + 58.04 [Partial Molecular Weight of PO of Starting Raw Materials (Propylene Glycol)] = 1989.

[Table 2]

Table 2

| Kinds | EO/PO Copolymer Amine |
|---|---|
| Amount of EO Used, g, number of mol | 1,409 g (32.0 mol) |
| **a** in the formula (1) | 32 |
| Amount of PO Used, g, number of mol | 522 g (9.0 mol) |
| **b** in the formula (1) | 9 |
| Molecular Weight of Copolymer Moiety | 2,000 |

Production Example 1 of Fine Cellulose Fiber Composite - Reference Example 1-1

A beaker equipped with a magnetic stirrer and a stirring bar was charged with 200 g of a dispersion of carboxy group-containing fine cellulose fibers, a solid content concentration of which was 2.0% by mass, obtained in Preparation Example 2 of Fine Cellulose Fibers. Subsequently, the beaker was charged with an amine of the kinds as listed in Table 2 in an amount corresponding to 0.3 mol of amine groups based on one mol of the carboxy groups of the fine cellulose fibers, and dissolved in 300 g of ion-exchanged water. The liquid reaction mixture was allowed to react at room temperature,

25°C, for 14 hours. After the termination of the reaction, the reaction mixture was filtered, and washed with ion-exchanged water, to provide a fine cellulose fiber composite in which the fine cellulose fibers subjected to a reduction treatment were bound with an EOPO copolymer via an ionic bonding.

Production Example 2 of Fine Cellulose Fiber Composite - Comparative Example 1-1

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with an amine of the kinds as listed in Table 2 in an amount corresponding to 0.3 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with an EOPO copolymer via an ionic bonding.

Production Example 3 of Fine Cellulose Fiber Composite - Example 2-1

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with propylamine in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to a reduction treatment were bound with a propyl group via an ionic bonding.

Production Example 4 of Fine Cellulose Fiber Composite - Comparative Example 2-1

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with propylamine in an amount corresponding to 1.0 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with a propyl group via an ionic bonding.

Production Example 5 of Fine Cellulose Fiber Composite - Example 2-2

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with hexylamine in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to a reduction treatment were bound with a hexyl group via an ionic bonding.

Production Example 6 of Fine Cellulose Fiber Composite - Comparative Example 2-2

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with hexylamine in an amount corresponding to 1.0 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with a hexyl group via an ionic bonding.

Production Example 7 of Fine Cellulose Fiber Composite - Reference Example 2-3

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with an aqueous tetrabutylammonium hydroxide solution in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to a reduction treatment were bound with a tetrabutylammonium group via an ionic bonding.

Production Example 8 of Fine Cellulose Fiber Composite - Comparative Example 2-3

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with an aqueous tetrabutylammonium hydroxide solution in an amount corresponding to 1.0 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with a tetrabutylammonium group via an ionic bonding.

Production Example 9 of Fine Cellulose Fiber Composite - Example 2-4

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with diethanolamine in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to a reduction treatment were bound with a diethanol group via an ionic bonding.

Production Example 10 of Fine Cellulose Fiber Composite - Comparative Example 2-4

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with diethanolamine in an amount corresponding to 1.0 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with a diethanol group via an ionic bonding.

Production Example 11 of Fine Cellulose Fiber Composite - Reference Example 2-5

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with the EOPO copolymer amine prepared in Production Example of EO/PO Copolymer Amine in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to a reduction treatment were bound with the EO/PO copolymer via an ionic bonding.

Production Example 12 of Fine Cellulose Fiber Composite - Comparative Example 2-5

A beaker equipped with a magnetic stirrer and a stirring bar was charged with 300 g of a dispersion of carboxy group-containing fine cellulose fibers, a solid content concentration of which was 1.8% by mass, obtained in Preparation

Example 3 of Fine Cellulose Fibers. Subsequently, the beaker was charged with the EOPO copolymer amine prepared in Production Example of EO/PO Copolymer Amine in an amount corresponding to 1.0 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with the EO/PO copolymer via an ionic bonding.

Production Example 13 of Fine Cellulose Fiber Composite - Example 2-6

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with dipropylamine in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to a reduction treatment were bound with a dipropyl group via an ionic bonding.

Production Example 14 of Fine Cellulose Fiber Composite - Comparative Example 2-6

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with dipropylamine in an amount corresponding to 1.0 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with a dipropyl group via an ionic bonding.

Production Example 15 of Fine Cellulose Fiber Composite - Reference Example 2-7

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with aniline in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to a reduction treatment were bound with a phenyl group via an ionic bonding.

Production Example 16 of Fine Cellulose Fiber Composite - Comparative Example 2-7

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with aniline in an amount corresponding to 1.0 mol of amine groups based on one mol of the carboxy groups of the fine cellulose fibers, and dissolved in 300 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers were bound with a phenyl group via an ionic bonding.

Production Example 17 of Fine Cellulose Fiber Composite - Example 2-8

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with propylamine in an amount corresponding to 1.0 mol of amine groups based on one mol of the carboxy groups of the fine cellulose fibers, 4-(4,6-dimethoxy-1,3,5-triazin-2-yl)-4-methylmorpholinum chloride (DMT-MM), a condensing agent, in an amount corresponding to 3 mol based on one mol of the carboxy groups of the fine cellulose fibers, and N-methylmorpholine (NMM) in an amount corresponding to 2 mol based on the carboxy groups of the fine cellulose fibers, and dissolved in 1,000 g of DMF. The liquid reaction

mixture was allowed to react at room temperature, 25°C, for 14 hours. After the termination of the reaction, the reaction mixture was filtered, and washed with ion-exchanged water, to remove a DMT-MM salt, to thereby provide a fine cellulose fiber composite in which the fine cellulose fibers subjected to a reduction treatment were bound with a propyl group via an amide bonding.

Production Example 18 of Fine Cellulose Fiber Composite - Comparative Example 2-8

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with propylamine in an amount corresponding to 1.0 mol of amine groups based on one mol of the carboxy groups of the fine cellulose fibers, DMT-MM, a condensing agent, in an amount corresponding to 3 mol based on one mol of the carboxy groups of the fine cellulose fibers, and NMM in an amount corresponding to 2 mol based on the carboxy groups of the fine cellulose fibers, and dissolved in 1,000 g of DMF. The liquid reaction mixture was allowed to react at room temperature, 25°C, for 14 hours. After the termination of the reaction, the reaction mixture was filtered, and washed with ion-exchanged water, to remove a DMT-MM salt, to thereby provide a fine cellulose fiber composite in which the fine cellulose fibers were bound with a propyl group via an amide bonding.

Production Example 19 of Fine Cellulose Fiber Composite - Example 2-9

A beaker equipped with a magnetic stirrer and a stirring bar was charged with 300 g of a dispersion of carboxy group-containing fine cellulose fibers, a solid content concentration of which was 2.0% by mass, obtained in Preparation Example 4 of Fine Cellulose Fibers. Subsequently, the beaker was charged with propylamine in an amount corresponding to 1.0 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, and washed with ion-exchanged water, to provide a fine cellulose fiber composite in which the fine cellulose fibers subjected to an oxidation treatment were bound with a propyl group via an ionic bonding.

Reference Example 1-1 and Comparative Example 1-1

< Production of Mixture of Plasticizer and Fine Cellulose Fiber Composite >

To a dispersion of fine cellulose fiber composite produced in Production Examples 1 and 2 of Fine Cellulose Fiber Composite was added a plasticizer di-2-ethylhexyl phthalate (DOP), manufactured by Kao Corporation so as to have a blending amount as listed in Table 3, and a mixture was agitated with an ultrasonic homogenizer US-300E, manufactured by NIHONSEIKI KAISHA, LTD. for 2 minutes. Thereafter, the agitated mixture was subjected to a finely fibrillating treatment with a high-pressure homogenizer manufactured by Sugino Machine Limited, Starburstlabo HJP-2 5005, under conditions at 100 MPa in two passes, and then at 150 MPa in one pass. The homogeneous mixture was poured into a glass petri dish, and subjected to vacuum drying for two days at 40°C, to produce a mixture of a plasticizer and a fine cellulose fiber composite.

< Polyvinyl Chloride Resin Composition >

With the mixture of the plasticizer and the fine cellulose fibers or a composite thereof obtained above, the components of the blending compositions as shown in Table 3, based on 100 parts of the polyvinyl chloride resin, were kneaded in a 50-milliliter tightly closed-type mixer at 170°C for 10 minutes, to provide a polyvinyl chloride resin composition. The resin composition obtained was preheated at 175°C for 4 minutes in a mold having dimensions of 15 × 15 × 0.2 cm, and then applied a pressure at a pressure of 5 kg/$cm^2$ for one minute and half, to provide a polyvinyl chloride sheet. The physical properties of the sheets were evaluated.

Example 2-1

< Rubber Composition >

Using a fine cellulose fiber composite obtained in Production Example 3 of Fine Cellulose Fiber Composite, a rubber composition was produced. Of the blending components listed in Table 4, the components excluding magnesium oxide (vulcanizing agent, manufactured by Wako Pure Chemical Industries, Ltd.), zinc oxide (vulcanization accelerator,

manufactured by Wako Pure Chemical Industries, Ltd.), and stearic acid (LUNAC S-70, manufactured by Kao Corporation) were kneaded in a 50-milliliter tightly closed type mixer for 6 minutes. The vessel was opened when the temperature reached 90°C, to provide a mixture. To the mixture were added magnesium oxide, zinc oxide, and stearic acid, and the mixture was kneaded in the 50-milliliter tightly closed type mixer for 3 minutes. The vessel was opened when the temperature reached 90°C, to provide an unvulcanized rubber composition. The rubber composition obtained was subjected to vulcanization treatment in a die having dimensions of 15 × 15 × 0.2 cm at 160°C for 20 minutes, to provide a vulcanized rubber sheet.

Examples 2-2 to 2-9 and Comparative Examples 2-1 to 2-8

The same procedures as in Example 2-1 were carried out except that the fine cellulose fiber composite produced in Production Example 3 of Fine Cellulose Fiber Composite was changed to a fine cellulose fiber composite listed in Table 4 or 5, to provide a vulcanized rubber sheet.

The properties of the polyvinyl chloride resin composition and the vulcanized rubber sheet of the rubber composition obtained were evaluated in accordance with a method of Test Example 1 detailed below. The results are shown in Tables 3 to 5. Here, with regard to the polyvinyl chloride resin composition, a polyvinyl chloride composite sheet was produced, and as the moldability during the production, a case where sheet formation was possible was evaluated as "G," and a case where sheet formation was impossible was evaluated as "NG."

Test Example 1 - Temperature at 5% by Mass Loss

Using a thermal analyzer manufactured by Hitachi High-Tech Science Corporation under the trade name of "STA7200," a mass loss obtained by placing an about 1 mg sample on an aluminum pan, and raising the temperature under a nitrogen atmosphere from 40°C to 300°C at a rate of 10°C per minute was measured. Supposing that the mass at 100°C was 100%, a temperature at which the mass was reduced by 5% was calculated. It is shown that the higher the temperature at 5% mass loss, the more excellent the heat resistance.

[Table 3]

Table 3

| | | Ref. Ex. 1-1 | Comp. Ex. 1-1 |
|---|---|---|---|
| Fine Cellulose Fiber Composite | Amine Having Modifying Group | EOPO Copolymer Amine | EOPO Copolymer Amine |
| | Binding Form of Modifying Group | Ionic Bonding | Ionic Bonding |
| | Presence or Absence of Aldehyde Reduction Treatment | Present | Absent |
| | Aldehyde Group Content, mmol/g | 0.02 | 0.27 |
| Components | Resin Content, Parts by Mass | 100 | 100 |
| | Plasticizer Content, Parts by Mass | 60 | 60 |
| | Content of Fine Cellulose Fiber Composite, Parts by Mass | 1 | 1 |
| Properties | Moldability | G | NG |
| | Temperature at 5% Mass Loss, °C | 245 | 225 |

[Table 4]

Table 4

| | | Examples | | | | | | | | |
|---|---|---|---|---|---|---|---|---|---|---|
| | | 2-1 | 2-2 | Ref. 2-3 | 2-4 | Ref. 2-5 | 2-6 | Ref. 2-7 | 2-8 | 2-9 |
| Fine Cellulose Fiber Composite | Amine Having Modifying Group | Propylamine | Hexylamine | TBAH-Amine | Diethanolamine | EOPO Copolymer Amine | Dipropylamine | Aniline | Propylamine | Propylamine |
| | Binding Form of Modifying Group | Ionic Bonding | Ionic Bonding | Ionic Bonding | Ionic Bonding | Ionic Bonding | Ionic Bonding | Ionic Bonding | Amide Bonding | Ionic Bonding |
| | Presence or Absence of Aldehyde Reduction Treatment | Present | Present | Present | Present | Present | Present | Present | Present | Absent |
| | Presence or Absence of Aldehyde Oxidization Treatment | Absent | Absent | Absent | Absent | Absent | Absent | Absent | Absent | Present |
| | Aldehyde Group Content, mmol/g | 0.02 | 0.02 | 0.02 | 0.02 | 0.02 | 0.02 | 0.02 | 0.02 | 0.04 |

(continued)

| | | Examples | | | | | | | | |
|---|---|---|---|---|---|---|---|---|---|---|
| | | 2-1 | 2-2 | Ref. 2-3 | 2-4 | Ref. 2-5 | 2-6 | Ref. 2-7 | 2-8 | 2-9 |
| Components | Rubber Content, Parts by Mass* | 100 | 100 | 100 | 100 | 100 | 100 | 100 | 100 | 100 |
| | Magnesium Oxide, Parts by Mass | 4 | 4 | 4 | 4 | 4 | 4 | 4 | 4 | 4 |
| | Zinc Oxide, Parts by Mass | 5 | 5 | 5 | 5 | 5 | 5 | 5 | 5 | 5 |
| | Stearic Acid, Parts by Mass | 2 | 2 | 2 | 2 | 2 | 2 | 2 | 2 | 2 |
| | Content of Fine Cellulose Fiber Composite, Parts by Mass | 10 | 10 | 10 | 10 | 10 | 10 | 10 | 10 | 10 |
| Physical Properties | Water Content | 0.5 | 0.4 | 0.5 | 0.5 | 0.6 | 0.6 | 0.4 | 0.4 | 0.5 |
| Properties | Temperature at 5% Mass Loss, °C | 284 | 288 | 265 | 277 | 280 | 285 | 283 | 293 | 275 |

*Chloroprene rubber (Decachloroprene DCR-36, manufactured by Denki Kagaku Kogyo Kabushiki Kaisha)

[Table 5]

Table 5

| | | Comparative Examples | | | | | | | |
|---|---|---|---|---|---|---|---|---|---|
| | | 2-1 | 2-2 | 2-3 | 2-4 | 2-5 | 2-6 | 2-7 | 2-8 |
| Fine Cellulose Fiber Composite | Amine Having Modifying Group | Propylamine | Hexylamine | TBAH-amine | Diethanolamine | EOPO Copolymer Amine | Dipropylamine | Aniline | Propylamine |
| | Binding Form of Modifying Group | Ionic Bonding | Ionic Bonding | Ionic Bonding | Ionic Bonding | Ionic Bonding | Ionic Bonding | Ionic Bonding | Amide Bonding |
| | Presence or Absence of Aldehyde Reduction Treatment | Absent | Absent | Absent | Absent | Absent | Absent | Absent | Absent |
| | Aldehyde Group Content, mmol/g | 0.27 | 0.27 | 0.27 | 0.27 | 0.27 | 0.27 | 0.27 | 0.27 |
| Components | Rubber Content, Parts by Mass | 100 | 100 | 100 | 100 | 100 | 100 | 100 | 100 |
| | Magnesium Oxide, Parts by Mass | 4 | 4 | 4 | 4 | 4 | 4 | 4 | 4 |
| | Zinc Oxide, Parts by Mass | 5 | 5 | 5 | 5 | 5 | 5 | 5 | 5 |
| | Stearic Acid, Parts by Mass | 2 | 2 | 2 | 2 | 2 | 2 | 2 | 2 |
| | Content of Fine Cellulose Fiber Composite, Parts by Mass | 10 | 10 | 10 | 10 | 10 | 10 | 10 | 10 |
| Physical Properties | Water Content | 0.6 | 0.6 | 0.4 | 0.6 | 0.5 | 0.4 | 0.6 | 0.7 |
| Properties | Temperature at 5% Mass Loss, °C | 236 | 244 | 223 | 230 | 236 | 239 | 236 | 276 |

Production Example 20 of Fine Cellulose Fiber Composite - Reference Example 3-1

A beaker equipped with a magnetic stirrer and a stirring bar was charged with 300 g of a dispersion of carboxy group-containing fine cellulose fibers, a solid content concentration of which was 2.0% by mass, obtained in Preparation Example 2 of Fine Cellulose Fibers. Subsequently, the beaker was charged with the EOPO copolymer amine prepared in Production Example of EO/PO Copolymer Amine in an amount corresponding to 0.1 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, washed with ion-exchanged water, and subjected to solvent replacement with DMF, to provide a fine cellulose fiber composite in which the fine cellulose fibers subjected to a reduction treatment were bound with the EO/PO copolymer via an ionic bonding.

Production Example 21 of Fine Cellulose Fiber Composite - Reference Example 3-2

A beaker equipped with a magnetic stirrer and a stirring bar was charged with 300 g of a dispersion of carboxy group-containing fine cellulose fibers, a solid content concentration of which was 1.2% by mass, obtained in Preparation Example 5 of Fine Cellulose Fibers. Subsequently, the beaker was charged with the EOPO copolymer amine prepared in Production Example of EO/PO Copolymer Amine in an amount corresponding to 0.1 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered, washed with ion-exchanged water, and subjected to solvent replacement with DMF, to provide a fine cellulose fiber composite in which the fine cellulose fibers subjected to a reduction treatment were bound with the EO/PO copolymer via an ionic bonding.

Production Example 22 of Fine Cellulose Fiber Composite - Comparative Example 3-1

A beaker equipped with a magnetic stirrer and a stirring bar was charged with 300 g of a dispersion of carboxy group-containing fine cellulose fibers, a solid content concentration of which was 1.8% by mass, obtained in Preparation Example 3 of Fine Cellulose Fibers. Subsequently, the beaker was charged with the EOPO copolymer amine prepared in Production Example of EO/PO Copolymer Amine in an amount corresponding to 0.1 mol of amine groups based on one mol of the carboxy groups of the fine cellulose fibers, and dissolved in 100 g of ion-exchanged water. The liquid reaction mixture was allowed to react at room temperature, 25°C, for 14 hours. After the termination of the reaction, the reaction mixture was filtered and washed with ion-exchanged water, to provide a fine cellulose fiber composite in which the fine cellulose fibers were bound with the EO/PO copolymer via an ionic bonding.

< Epoxy Resin Composition >

Example 3-1

To 5 parts by mass of a fine cellulose fiber composite produced in Production Example 20 were added 100 parts by mass of an epoxy resin manufactured by Mitsubishi Chemical Corporation under the trade name of jER828, 5 parts by mass of a curing agent 2-ethyl-4-methylimidazole, manufactured by Wako Pure Industries, Ltd., and 340 parts by mass of a solvent DMF, and a mixture was stirred with an ultrasonic homogenizer manufactured by NIHONSEIKI KAISHA, LTD. under the trade name of US-300E for 2 minutes. Thereafter, the agitated mixture was subjected to a finely fibrillating treatment with a high-pressure homogenizer manufactured by YOSHIDA KIKAI CO., LTD. under the trade name of NanoVater L-ES at 150 MPa in three passes, and further agitated with an agitator manufactured by THINKY CORPORATION under the trade name of Awatori Rentaro for 7 minutes. A solution obtained was applied using a bar coater, and dried at 80°C for 60 minutes, to remove the solvents. Thereafter, the coating film was thermally cured at 150°C for 60 minutes, to provide an epoxy resin composition.

Reference Example 3-2 and Comparative Example 3-1

The same procedures as in Example 3-1 were carried out except that a fine cellulose fiber composite produced in Production Example 21 (Reference Example 3-2) or Production Example 22 (Comparative Example 3-1) was used, in place of the fine cellulose fiber composite produced in Production Example 20, to provide an epoxy resin composition.

Test Example 2 - Temperature at 1% Mass Loss

Using a thermal analyzer manufactured by Hitachi High-Tech Science Corporation under the trade name of "STA7200," a mass loss obtained by placing an about 1 mg sample on an aluminum pan, and raising the temperature under a nitrogen atmosphere from 40°C to 300°C at a rate of 10°C per minute was measured. Supposing that the mass at 100°C was 100%, a temperature at which the mass was reduced by 1% was calculated. It is shown that the higher the temperature at 1% mass loss, the more excellent the heat resistance. The results are shown in Table 6.

[Table 6]

Table 6

| | | Ex. | | Comp. Ex. |
|---|---|---|---|---|
| | | Ref. 3-1 | Ref. 3-2 | 3-1 |
| Fine Cellulose Fiber Composite | Amine Having Modifying Group | EOPO Copolymer Amine | EOPO Copolymer Amine | EOPO Copolymer Amine |
| | Binding Form of Modifying Group | Ionic Bonding | Ionic Bonding | Ionic Bonding |
| | Presence or Absence of Aldehyde Reduction Treatment | Present | Absent | Absent |
| | Aldehyde Group Content, mmol/g | 0.02 | 0.17 | 0.27 |
| Components | Epoxy Resin, Parts by Mass | 100 | 100 | 100 |
| | Curing Agent, Parts by Mass | 5 | 5 | 5 |
| | Content of Fine Cellulose Fiber Composite, Parts by Mass | 5 | 5 | 5 |
| Physical Properties | Temperature at 1% Mass Loss, °C | 275 | 249 | 220 |

It can be seen from Tables 3 to 6 that even if modified by the same modifying group, the resin compositions of Examples containing a composite having an aldehyde group content of 0.15 mmol/g or less have excellent heat resistance regardless of the kinds of the resins.

INDUSTRIAL APPLICABILITY

The resin composition of the present invention can be suitably used in various industrial applications such as daily sundries, household electric appliance parts, and automobile parts.

## Claims

**1.** A resin composition comprising

a) a resin, wherein the resin is:

an elastomeric resin and is a diene-based rubber or a non-diene-based rubber,
a thermoplastic resin and is a (meth)acrylic resin,
a thermosetting resin and is an epoxy resin or a polyurethane resin, or
a photocurable resin including a urethane (meth)acrylate oligomer or resin; and

b) a cellulose fiber composite having a carboxy group in the cellulose molecule,
wherein an aldehyde group content is 0.15 mmol/g or less as measured according to the description, and wherein the cellulose fiber composite comprises a compound having a modifying group that is ionically bound and/or covalently bound to a carboxy group on the cellulose fiber surface;

wherein the compound having a modifying group contains a primary amine, a secondary amine or a tertiary amine and has a chained saturated hydrocarbon group, and
wherein the cellulose fiber composite is finely fibrillated.

**2.** The resin composition according to claim 1, wherein the aldehyde group content of the cellulose fiber composite is 0.1 mmol/g or less.

**3.** The resin composition according to claim 1 or 2, wherein the compound having a modifying group contains propylamine, dipropylamine or hexylamine.

**4.** The resin composition according to any one of claims 1 to 3, wherein the compound having a modifying group contains propylamine and is covalently bound to a carboxy group of cellulose fibers via an amide bonding.

**5.** The resin composition according to any one of claims 1 to 4, wherein the crystallinity of the cellulose fiber composite is 20% or more, wherein the crystallinity is measured according to the description.

**6.** A molded article comprising a resin composition as defined in any one of claims 1 to 5.

**7.** A method for producing a resin composition as defined in any one of claims 1 to 5, comprising melt-kneading

a) a resin, wherein the resin is:

an elastomeric resin and is a diene-based rubber or a non-diene-based rubber,
a thermoplastic resin and is a (meth)acrylic resin,
a thermosetting resin and is an epoxy resin or a polyurethane resin, or
a photocurable resin including a urethane (meth)acrylate oligomer or resin; and

b) a cellulose fiber composite having a carboxy group in the cellulose molecule, wherein an aldehyde group content is 0.15 mmol/g or less, and wherein the cellulose fiber composite comprises a compound having a modifying group that is ionically bound and/or covalently bound to a carboxy group on the cellulose fiber surface;
wherein the compound having a modifying group contains a primary amine, a secondary amine or a tertiary amine and has a chained saturated hydrocarbon group; and
wherein the cellulose fiber composite is finely fibrillated.

**8.** Use of a cellulose fiber composite as an additive for a resin composition according to any one of claims 1 to 5, the cellulose fiber composite having a carboxy group in the cellulose molecule,

wherein an aldehyde group content is 0,15 mmol/g or less, and wherein the cellulose fiber composite comprises a compound having a modifying group that is ionically bound and/or covalently bound to a carboxy group on the cellulose fiber surface;
wherein the compound having a modifying group contains a primary amine, a secondary amine or a tertiary amine and has a chained saturated hydrocarbon group; and
wherein the cellulose fiber composite is finely fibrillated.

**9.** The use according to claim 8, wherein the cellulose fiber composite comprises one selected from the group consisting of propylamine, dipropylamine and hexylamine bound to the carboxy group via an ionic bonding and/or a covalent bonding.

**10.** The use according to any one of claims 8 or 9, wherein the aldehyde group content of the cellulose fiber composite is 0.1 mmol/g or less.

**11.** The use according to any one of claims 8 to 10, wherein the aldehyde group content of the cellulose fiber composite is 0.05 mmol/g or less.

**Patentansprüche**

**1.** Harzzusammensetzung, umfassend

a) ein Harz, worin das Harz:

ein elastomeres Harz ist und ein Dien-basierter Kautschuk oder ein Nicht-Dien-basierter Kautschuk ist,
ein thermoplastisches Harz ist und ein (Meth)Acrylharz ist,
ein thermisch härtbares Harz ist und ein Epoxidharz oder ein Polyurethanharz ist, oder
ein photohärtbares Harz ist, das ein
Urethan(meth)acrylat-Oligomer oder -Harz enthält; und

b) einen Cellulosefaserverbundstoff mit einer Carboxygruppe im Cellulosemolekül,
worin ein Aldehydgruppengehalt 0,15 mmol/g oder weniger beträgt, gemessen gemäß der Beschreibung, und
worin der Cellulosefaserverbundstoff eine Verbindung mit einer modifizierenden Gruppe umfasst, die ionisch und/oder kovalent an eine Carboxygruppe auf der Cellulosefaseroberfläche gebunden ist;
worin die Verbindung mit einer modifizierenden Gruppe ein primäres Amin, ein sekundäres Amin oder ein tertiäres Amin enthält und eine kettenförmige gesättigte Kohlenwasserstoffgruppe aufweist, und
worin der Cellulosefaserverbundstoff fein fibrilliert ist.

**2.** Harzzusammensetzung gemäß Anspruch 1, worin der Aldehydgruppengehalt des Cellulosefaserverbundstoffs 0,1 mmol/g oder weniger beträgt.

**3.** Harzzusammensetzung gemäß Anspruch 1 oder 2, worin die Verbindung mit einer modifizierenden Gruppe Propylamin, Dipropylamin oder Hexylamin enthält.

**4.** Harzzusammensetzung gemäß einem der Ansprüche 1 bis 3, worin die Verbindung mit einer modifizierenden Gruppe Propylamin enthält und über eine Amidbindung kovalent an eine Carboxygruppe der Cellulosefasern gebunden ist.

**5.** Harzzusammensetzung gemäß einem der Ansprüche 1 bis 4, worin die Kristallinität des Cellulosefaserverbundstoffs 20% oder mehr beträgt, worin die Kristallinität gemäß der Beschreibung gemessen wird.

**6.** Formkörper, umfassend eine Harzzusammensetzung wie in einem der Ansprüche 1 bis 5 definiert.

**7.** Verfahren zur Herstellung einer Harzzusammensetzung wie in einem der Ansprüche 1 bis 5 definiert, umfassend Schmelzkneten

a) eines Harzes, worin das Harz:

ein elastomeres Harz ist und ein Dien-basierter Kautschuk oder ein Nicht-Dien-basierter Kautschuk ist,
ein thermoplastisches Harz ist und ein (Meth)Acrylharz ist,
ein thermisch härtbares Harz ist und ein Epoxidharz oder
ein Polyurethanharz ist, oder
ein photohärtbares Harz ist, das ein
Urethan(meth)acrylat-Oligomer oder -Harz enthält; und

b) eines Cellulosefaserverbundstoffs mit einer Carboxygruppe im Cellulosemolekül, worin ein Aldehydgruppengehalt 0,15 mmol/g oder weniger beträgt, und
worin der Cellulosefaserverbundstoff eine Verbindung mit einer modifizierenden Gruppe umfasst, die ionisch und/oder kovalent an eine Carboxygruppe auf der Cellulosefaseroberfläche gebunden ist;
worin die Verbindung mit einer modifizierenden Gruppe ein primäres Amin, ein sekundäres Amin oder ein tertiäres Amin enthält und eine kettenförmige gesättigte Kohlenwasserstoffgruppe aufweist, und
worin der Cellulosefaserverbundstoff fein fibrilliert ist.

**8.** Verwendung eines Cellulosefaserverbundstoffs als Additiv für eine Harzzusammensetzung gemäß einem der Ansprüche 1 bis 5, worin der Cellulosefaserverbundstoff eine Carboxygruppe im Cellulosemolekül aufweist,

worin ein Aldehydgruppengehalt 0,15 mmol/g oder weniger beträgt, und
worin der Cellulosefaserverbundstoff eine Verbindung mit einer modifizierenden Gruppe umfasst, die ionisch und/oder kovalent an eine Carboxygruppe auf der Cellulosefaseroberfläche gebunden ist;
worin die Verbindung mit einer modifizierenden Gruppe ein primäres Amin, ein sekundäres Amin oder ein tertiäres Amin enthält und eine kettenförmige gesättigte Kohlenwasserstoffgruppe aufweist; und

worin der Cellulosefaserverbundstoff fein fibrilliert ist.

**9.** Verwendung gemäß Anspruch 8, worin der Cellulosefaserverbundstoff eines, ausgewählt aus der Gruppe bestehend aus Propylamin, Dipropylamin und Hexylamin, umfasst, das über eine ionische Bindung und/oder eine kovalente Bindung and die Carboxygruppe gebunden ist.

**10.** Verwendung gemäß einem der Ansprüche 8 oder 9, worin der Aldehydgruppengehalt des Cellulosefaserverbundstoffs 0,1 mmol/g oder weniger beträgt.

**11.** Verwendung gemäß einem der Ansprüche 8 bis 10, worin der Aldehydgruppengehalt des Cellulosefaserverbundstoffs 0,05 mmol/g oder weniger beträgt.

**Revendications**

**1.** Composition de résine comprenant

a) une résine, dans laquelle la résine est:

une résine élastomère et est un caoutchouc à base de diène ou un caoutchouc sans diène,
une résine thermoplastique et est une résine (méth)acrylique,
une résine thermodurcissable et est une résine époxy ou une résine polyuréthane, ou
une résine photodurcissable comprenant un oligomère ou une résine d'uréthane (méth)acrylate ; et

b) un composite de fibres de cellulose ayant un groupe carboxy dans la molécule de cellulose,
dans laquelle la teneur en groupe aldéhyde est de 0,15 mmol/g ou moins, telle que mesurée selon la description, et
dans laquelle le composite de fibres de cellulose comprend un composé ayant un groupe modificateur qui est lié ioniquement et/ou lié de manière covalente à un groupe carboxy sur la surface de la fibre de cellulose ;
dans laquelle le composé ayant un groupe modificateur contient une amine primaire, une amine secondaire ou une amine tertiaire et a un groupe hydrocarboné saturé en chaîne, et
dans laquelle le composite de fibres de cellulose est finement fibrillé.

**2.** La composition de résine selon la revendication 1, dans laquelle la teneur en groupes aldéhyde du composite de fibres de cellulose est de 0,1 mmol/g ou moins.

**3.** La composition de résine selon la revendication 1 ou 2, dans laquelle le composé ayant un groupe modificateur contient de la propylamine, de la dipropylamine ou de l'hexylamine.

**4.** La composition de résine selon l'une quelconque des revendications 1 à 3, dans laquelle le composé ayant un groupe modificateur contient de la propylamine et est lié de manière covalente à un groupe carboxy des fibres de cellulose via une liaison amide.

**5.** La composition de résine selon l'une quelconque des revendications 1 à 4, dans laquelle la cristallinité du composite de fibres de cellulose est de 20% ou plus, la cristallinité étant mesurée conformément à la description.

**6.** Article moulé comprenant une composition de résine telle que définie dans l'une quelconque des revendications 1 à 5.

**7.** Procédé de production d'une composition de résine telle que définie dans l'une quelconque des revendications 1 à 5, comprenant le malaxage à l'état fondu

a) d'une résine, dans lequel la résine est:

une résine élastomère et est un caoutchouc à base de diène ou un caoutchouc sans diène,
une résine thermoplastique et est une résine (méth)acrylique,
une résine thermodurcissable et est une résine époxy ou une résine polyuréthane, ou
une résine photodurcissable comprenant un oligomère ou une résine d'uréthane (méth)acrylate ; et

b) un composite de fibres de cellulose ayant un groupe carboxy dans la molécule de cellulose, dans lequel la teneur en groupe aldéhyde est de 0,15 mmol/g ou moins, et dans laquelle le composite de fibres de cellulose comprend un composé ayant un groupe modificateur qui est lié ioniquement et/ou lié de manière covalente à un groupe carboxy sur la surface de la fibre de cellulose ;
dans laquelle le composé ayant un groupe modificateur contient une amine primaire, une amine secondaire ou une amine tertiaire et a un groupe hydrocarboné saturé en chaîne ; et
dans laquelle le composite de fibres de cellulose est finement fibrillé.

**8.** Utilisation d'un composite de fibres de cellulose comme additif pour une composition de résine selon l'une quelconque des revendications 1 à 5, le composite de fibres de cellulose ayant un groupe carboxy dans la molécule de cellulose,

dans laquelle la teneur en groupe aldéhyde est de 0,15 mmol/g ou moins, et
dans laquelle le composite de fibres de cellulose comprend un composé ayant un groupe modificateur qui est lié ioniquement et/ou lié de manière covalente à un groupe carboxy à la surface de la fibre de cellulose ;
dans laquelle le composé ayant un groupe modificateur contient une amine primaire, une amine secondaire ou une amine tertiaire et a un groupe hydrocarboné saturé en chaîne ; et
dans laquelle le composite de fibres de cellulose est finement fibrillé.

**9.** L'utilisation selon la revendication 8, dans laquelle le composite de fibres de cellulose comprend un composé choisi dans le groupe constitué par la propylamine, la dipropylamine et l'hexylamine lié au groupe carboxy par une liaison ionique et/ou une liaison covalente.

**10.** L'utilisation selon l'une quelconque des revendications 8 ou 9, dans laquelle la teneur en groupes aldéhyde du composite de fibres de cellulose est de 0,1 mmol/g ou moins.

**11.** L'utilisation selon l'une quelconque des revendications 8 à 10, dans laquelle la teneur en groupes aldéhyde du composite de fibres de cellulose est de à 0,05 mmol/g ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011140738 A
- JP 2013151636 A
- JP 2013151661 A
- EP 3088600 A1
- EP 2615128 A1
- JP HEI3181448 A
- JP 2011140632 A
- JP 2015143336 A
- JP 2015143337 A
- JP 2008174718 A
- JP 2008115372 A


### Non-patent literature cited in the description


- **GOSEI KAGAKU** ; **SHIRIZU PEPUCHIDO GOSEI**. Synthetic Chemistry Series Peptide Synthesis. Maruzen Publishing, 116
- *Tetrahedron,*, 2001, vol. 57, 1551